(19) **Europäisches Patentamt**
**European Patent Office**
**Office européen des brevets**

(11) **EP 3 447 711 B1**

(12) **EUROPEAN PATENT SPECIFICATION**

(45) Date of publication and mention
of the grant of the patent:
**23.10.2024 Bulletin 2024/43**

(21) Application number: **18190771.8**

(22) Date of filing: **24.08.2018**

(51) International Patent Classification (IPC):
**G06Q 30/0201** (2023.01)    **G06Q 30/0202** (2023.01)

(52) Cooperative Patent Classification (CPC):
**G06Q 30/0201; G06Q 30/0202**

(54) **WEBSITE INTEREST DETECTOR**

WEBSITE-INTERESSENDETEKTOR

DÉTECTEUR D'INTÉRÊT DE SITE WEB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2017 US 201762549812 P
22.08.2018 US 201816109648**

(43) Date of publication of application:
**27.02.2019 Bulletin 2019/09**

(73) Proprietor: **Bombora, Inc.
New York, NY 10010 (US)**

(72) Inventors:
• **HALECKY, Nicholaus Eugene
Reno, Nevada 89509 (US)**
• **ARMSTRONG, Robert James
Reno, Nevada 89501 (US)**

• **MATLICK, Erik Gregory
New York, New York 10010 (US)**

(74) Representative: **Prinz & Partner mbB
Patent- und Rechtsanwälte
Rundfunkplatz 2
80335 München (DE)**

(56) References cited:
**WO-A1-2017/116493      US-A1- 2011 320 715
US-A1- 2014 280 890**

• **JASON BURBY ET AL: "Web Analytics
Definitions", 23 August 2007 (2007-08-23),
XP055505869, Retrieved from the Internet
<URL:https://www.digitalanalyticsassociation.o
rg/Files/PDF_standards/WebAnalyticsDefinition
sVol1.pdf> [retrieved on 20180910]**

**Description**

The present application is a continuation in part of U.S. Patent Application Ser. No. 14/981,529, entitled: SURGE DETECTOR FOR CONTENT CONSUMPTION, filed December 21, 2015; which is a continuation in part of U.S. Patent No. 9,940,634, entitled: CONTENT CONSUMPTION MONITOR, filed September 26, 2014. The present application also claims priority to U.S. Provisional Patent Application Ser. No. 62/549,812 filed August 24, 2017 entitled: CLASSIFYING SOURCES OF CONTENT CONSUMPTION.

BACKGROUND

Users receive a random variety of different information from a random variety of different businesses. For example, users may constantly receive promotional announcements, advertisements, information notices, event notifications, etc. Users request some of this information. For example, a user may register on a company website to receive sales or information announcements. However, much of the information is of little or no interest to the user. For example, the user may receive emails announcing every upcoming seminar, regardless of the subject matter.

The user also may receive unsolicited information. For example, a user may register on a website to download a white paper on a particular subject. A lead service then may sell the email address to companies that send the user unsolicited advertisements. Users end up ignoring most or all of these emails since most of the information has no relevance or interest. Alternatively, the user directs all of these emails into a junk email folder.

WO 2017/116493 A1 discloses a method to identify events and a number thereof generated by a user or an entity interacting with a website or websites.

"Web Analytics Definitions" by Jason Burby et al. provides definitions of terms that are related to web analytics.

US 2014/0280890 A1 relates to methods, systems, and programming for measuring user engagement in personalized content recommendation.

In US 2011/0320715 A1 trending content items are detected by analyzing references to specific topics that are shared from a user to another user or a user community.

BRIEF DESCRIPTION OF THE DRAWINGS

FIG. 1 depicts an example content consumption monitor (CCM).

FIG. 2 depicts an example of the CCM in more detail.

FIG. 3 depicts an example operation of a CCM tag.

FIG. 4 depicts example events processed by the CCM.

FIG. 5 depicts an example user intent vector.

FIG. 6 depicts an example process for segmenting users.

FIG. 7 depicts an example process for generating company intent vectors.

FIG. 8 depicts an example consumption score generator.

FIG. 9 depicts the example consumption score generator in more detail.

FIG. 10 depicts an example process for identifying a surge in consumption scores.

FIG. 11 depicts an example process for calculating initial consumption scores.

FIG. 12 depicts an example process for adjusting the initial consumption scores based on historic baseline events.

FIG. 13 depicts an example process for mapping surge topics with contacts.

FIG. 14 depicts an example content consumption monitor calculating content intent.

FIG. 15 depicts an example process for adjusting a consumption score based on content intent.

FIG. 16 depicts an example of the site classifier in more detail.

FIG. 17 depicts an example process for site classification.

FIG. 18 depicts an example CCM that uses a site classifier.

FIG. 19 depicts an example of how an event processor translates raw events into hostname events.

FIG. 20 depicts an example of how the event processor generates website interest features from the hostname events.

FIG. 21 depicts an example of how the event processor calculates an event count ratio.

FIG. 22 depicts an example of how the event processor calculates a unique user count ratio.

FIG. 23 depicts an example of how the event processor calculates an engagement score ratio.

FIG. 24 depicts an example of how the event processor identifies surges in the website feature ratios.

FIG. 25A depicts an example of how the event processor calculates a website cluster interest score.

FIG. 25B depicts an example of how the event processor calculates a topic cluster interest score.

FIG. 26 depicts an example of how the event processor calculates a buyer intent score.

FIG. 27 depicts an example of how the event processor identifies a surge in the buyer intent score.

FIG. 28 depicts an example computing device for the CCM.

## DETAILED DESCRIPTION

Companies may research topics on the Internet as a prelude to purchasing items or services related to the topics. A content consumption monitor (CCM) generates consumption scores identifying the level of company interest in different topics. The CCM may go beyond just identifying companies interested in specific topics and also identify surge data indicating when the companies are most receptive to direct contacts regarding different topics. Publishers may use the surge data to increase interest in published information. In one example, the publishers may include advertisers who use the surge data to increase advertising conversion rates.

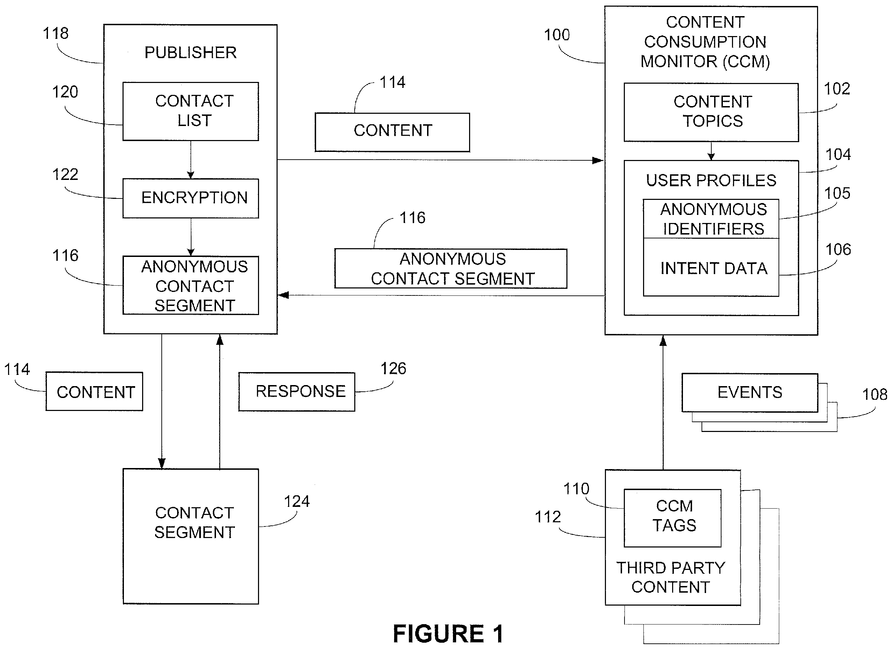

FIG. 1 depicts a content consumption monitor (CCM) 100. CCM 100 may be a server or any other computing system that communicates with a publisher 118 and monitors user accesses to third party content 112. Publisher 118 is any server or computer operated by a company or individual that wants to send content 114 to an interested group of users. This group of users is alternatively referred to as contact segment 124.

For example, publisher 118 may be a company that sells electric cars. Publisher 118 may have a contact list 120 of email addresses for customers that have attended prior seminars or have registered on the publisher website. Contact list 120 also may be generated by CCM tags 110 that are described in more detail below. Publisher 118 also may generate contact list 120 from lead lists provided by third parties lead services, retail outlets, and/or other promotions or points of sale, or the like or any combination thereof. Publisher 118 may want to send email announcements for an upcoming electric car seminar. Publisher 118 would like to increase the number of attendees at the seminar.

Third party content 112 comprises any information on any subject accessed by any user. Third party content 112 may include web pages provided on website servers operated by different businesses and/or individuals. For example, third party content 112 may come from different websites operated by on-line retailers and wholesalers, on-line newspapers, universities, blogs, municipalities, social media sites, or any other entity that supplies content.

Third party content 112 also may include information not accessed directly from websites. For example, users may access registration information at seminars, retail stores, and other events. Third party content 112 also may include content provided by publisher 118.

Computers and/or servers associated with publisher 118, content segment 124, CCM 100 and third-party content 112 may communicate over the Internet or any other wired or wireless network including local area networks (LANs), wide area networks (WANs), wireless networks, cellular networks, Wi-Fi networks, Bluetooth® networks, cable networks, or the like, or any combination thereof.

Some of third party content 112 may contain CCM tags 110 that capture and send events 108 to CCM 100. For example, CCM tags 110 may comprise JavaScript added to website web pages. The website downloads the web pages, along with CCM tags 110, to user computers. User computers may include any communication and/or processing device including but not limited to laptop computers, personal computers, smart phones, terminals, tablet computers, or the like, or any combination thereof. CCM tags 110 monitor web sessions send some captured web session events 108 to CCM 100.

Events 108 may identify third party content 112 and identify the user accessing third party content 112. For example, event 108 may include a universal resource locator (URL) link to third party content 112 and may include a hashed user email address or cookie identifier associated with the user that accessed third party content 112. Events 108 also may identify an access activity associated with third party content 112. For example, event 108 may indicate the user viewed a web page, downloaded an electronic document, or registered for a seminar.

CCM 100 builds user profiles 104 from events 108. User profiles 104 may include anonymous identifiers 105 that associate third party content 112 with particular users. User profiles 104 also may include intent data 106 that identifies topics in third party content 112 accessed by the users. For example, intent data 106 may comprise a user intent vector that identifies the topics and identifies levels of user interest in the topics.

As mentioned above, publisher 118 may want to send an email announcing an electric car seminar to a particular contact segment 124 of users interested in electric cars. Publisher 118 may send the email as content 114 to CCM 100. CCM 100 identifies topics 102 in content 114.

CCM 100 compares content topics 102 with intent data 106. CCM 100 identifies the user profiles 104 that indicate an interest in content 114. CCM 100 sends anonymous identifiers 105 for the identified user profiles 104 to publisher 118 as anonymous contact segment 116.

Contact list 120 may include user identifiers, such as email addresses, names, phone numbers, or the like, or any combination thereof. The identifiers in contact list 120 are hashed or otherwise de-identified by an algorithm 122. Publisher 118 compares the hashed identifiers from contact list 120 with the anonymous identifiers 105 in anonymous contact segment 116.

Any matching identifiers are identified as contact segment 124. Publisher 118 identifies the unencrypted email addresses in contact list 120 associated with contact segment 124. Publisher 118 sends content 114 to the email addresses identified for contact segment 124. For example, publisher 118 sends email announcing the electric car seminar to contact segment 124.

Sending content 114 to contact segment 124 may generate a substantial lift in the number of positive responses 126. For example, assume publisher 118 wants to send emails announcing early bird specials for the upcoming seminar. The seminar may include ten different tracks, such as electric cars, environmental issues, renewable energy, etc. In the past, publisher 118 may have sent ten different emails for each separate track to everyone in contact list 120.

Publisher 118 may now only send the email regarding the electric car track to contacts identified in contact segment 124. The number of positive responses 126 registering for the electric car track of the seminar may substantially increase since content 114 is now directed to users interested in electric cars.

In another example, CCM 100 may provide local ad campaign or email segmentation. For example, CCM 100 may provide a "yes" or "no" as to whether a particular advertisement should be shown to a particular user. In this example, CCM 100 may use the hashed data without re-identification of users and the "yes/no" action recommendation may key off of a de-identified hash value.

CCM 100 may revitalize cold contacts in publisher contact list 120. CCM 100 can identify the users in contact list 120 that are currently accessing other third party content 112 and identify the topics associated with third party content 112. By monitoring accesses to third party content 112, CCM 100 may identify current user interests even though those interests may not align with the content currently provided by publisher 118. Publisher 118 might reengage the cold contacts by providing content 114 more aligned with the most relevant topics identified in third party content 112.

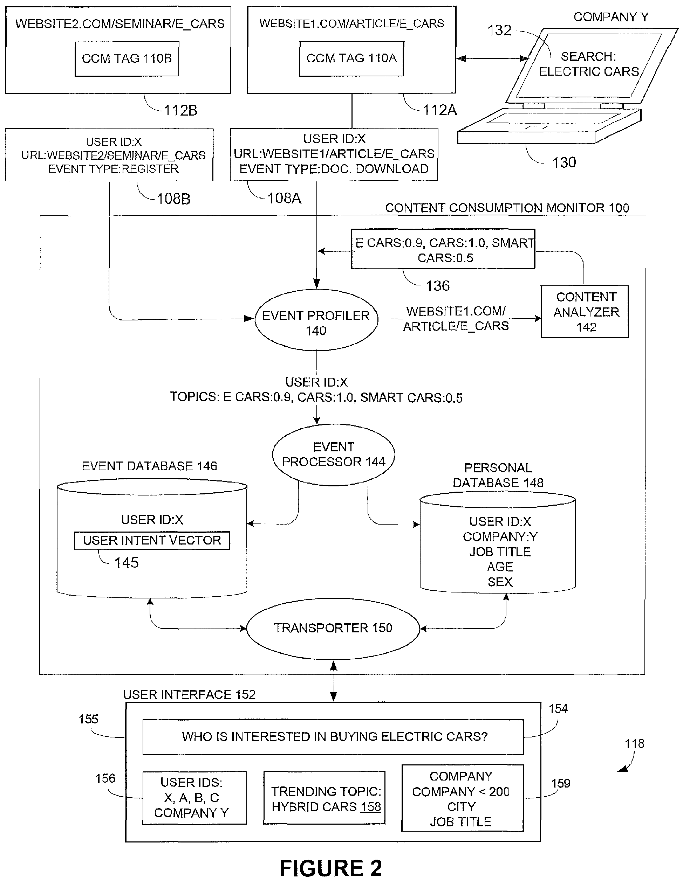

FIG. 2 is a diagram explaining the content consumption manager in more detail. A user may enter a search query 132 into a computer 130 via a search engine. The user may work for a company Y. For example, the user may have an associated email address USER@COMPANY_Y.com.

In response to search query 132, the search engine may display links to content 112A and 112B on website1 and website2, respectively. The user may click on the link to website1. Website1 may download a web page to computer 130 that includes a link to a white paper. Website1 may include one or more web pages with CCM tags 110A that capture different events during the web session between website1 and computer 130. Website1 or another website may have downloaded a cookie onto a web browser operating on computer 130. The cookie may comprise an identifier X, such as a unique alphanumeric set of characters associated with the web browser on computer 130.

During the web session with website1, the user of computer 130 may click on a link to white paper 112A. In response to the mouse click, CCM tag 110A may download an event 108A to CCM 100. Event 108A may identify the cookie identifier X loaded on the web browser of computer 130. In addition, or alternatively, CCM tag 110A may capture a user name and/or email address entered into one or more web page fields during the web session. CCM tag 110 hashes the email address and includes the hashed email address in event 108A. Any identifier associated with the user is referred to generally as user X or user ID.

CCM tag 110A also may include a link in event 108A to the white paper downloaded from website1 to computer 130. For example, CCM tag 110A may capture the universal resource locator (URL) for white paper 112A. CCM tag 110A also may include an event type identifier in event 108A that identifies an action or activity associated with content 112A. For example, CCM tag 110A may insert an event type identifier into event 108A that indicates the user downloaded an electric document.

CCM tag 110A also may identify the launching platform for accessing content 112B. For example, CCM tag 110B may identify a link www.searchengine.com to the search engine used for accessing website1.

An event profiler 140 in CCM 100 forwards the URL identified in event 108A to a content analyzer 142. Content analyzer 142 generates a set of topics 136 associated with or suggested by white paper 112A. For example, topics 136 may include electric cars, cars, smart cars, electric batteries, etc. Each topic 136 may have an associated relevancy score indicating the relevancy of the topic in white paper 112A. Content analyzers that identify topics in documents are known to those skilled in the art and are therefore not described in further detail.

Event profiler 140 forwards the user ID, topics 136, event type, and any other data from event 108A to event processor 144. Event processor 144 may store personal information captured in event 108A in a personal database 148. For example, during the web session with website1, the user may have entered an employer company name into a web page form field. CCM tag 110A may copy the employer company name into event 108A. Alternatively, CCM 100 may identify the company name from a domain name of the user email address.

Event processor 144 may store other demographic information from event 108A in personal database 148, such as user job title, age, sex, geographic location (postal address), etc. In one example, some of the information in personal database 148 is hashed, such as the user ID and or any other personally identifiable information. Other information in personal database 148 may be anonymous to any specific user, such as company name and job title.

Event processor 144 builds a user intent vector 145 from topic vectors 136. Event processor 144 continuously updates user intent vector 145 based on other received events 108. For example, the search engine may display a second link to website2 in response to search query 132. User X may click on the second link and website2 may download a web page to computer 130 announcing the seminar on electric cars.

The web page downloaded by website2 also may include a CCM tag 110B. User X may register for the seminar during the web session with website2. CCM tag 110B may generate a second event 108B that includes the user ID: X, a URL link to the web page announcing the seminar, and an event type indicating the user registered for the electric car seminar advertised on the web page.

CCM tag 110B sends event 108B to CCM 100. Content analyzer 142 generates a second set of topics 136. Event 108B may contain additional personal information associated with user X. Event processor 144 may add the additional personal information to personal database 148.

Event processor 144 updates user intent vector 145 based on the second set of topics 136 identified for event 108B. Event processor 144 may add new topics to user intent vector 145 or may change the relevancy scores for existing topics. For example, topics identified in both event 108A and 108B may be assigned higher relevancy scores. Event processor 144 also may adjust relevancy scores based on the associated event type identified in events 108.

Publisher 118 may submit a search query 154 to CCM 100 via a user interface 152 on a computer 155. For example, search query 154 may ask WHO IS INTERESTED IN BUYING ELECTRIC CARS? A transporter 150 in CCM 100 searches user intent vectors 145 for electric car topics with high relevancy scores. Transporter 150 may identify user intent vector 145 for user X. Transporter 150 identifies user X and other users A, B, and C interested in electric cars in search results 156.

As mentioned above, the user IDs may be hashed and CCM 100 may not know the actual identities of users X, A, B, and C. CCM 100 may provide a segment of hashed user IDs X, A, B, and C to publisher 118 in response to query 154.

Publisher 118 may have a contact list 120 of users (FIG. 1). Publisher 118 may hash email addresses in contact list 120 and compare the hashed identifiers with the encrypted or hashed user IDs X, A, B, and C. Publisher 118 identifies the unencrypted email address for matching user identifiers. Publisher 118 then sends information related to electric cars to the email addresses of the identified user segment. For example, publisher 118 may send emails containing white papers, advertisements, articles, announcements, seminar notifications, or the like, or any combination thereof.

CCM 100 may provide other information in response to search query 154. For example, event processor 144 may aggregate user intent vectors 145 for users employed by the same company Y into a company intent vector. The company intent vector for company Y may indicate a strong interest in electric cars. Accordingly, CCM 100 may identify company Y in search results 156. By aggregating user intent vectors 145, CCM 100 can identify the intent of a company or other category without disclosing any specific user personal information, e.g., without regarding a user's online browsing activity.

CCM 100 continuously receives events 108 for different third-party content. Event processor 144 may aggregate events 108 for a particular time period, such as for a current day, for the past week, or for the past 30 days. Event processor 144 then may identify trending topics 158 within that particular time period. For example, event processor 144 may identify the topics with the highest average relevancy values over the last 30 days.

Different filters 159 may be applied to the intent data stored in event database 146. For example, filters 159 may direct event processor 144 to identify users in a particular company Y that are interested in electric cars. In another example, filters 159 may direct event processor 144 to identify companies with less than 200 employees that are interested in electric cars.

Filters 159 also may direct event processor 144 to identify users with a particular job title that are interested in electric cars or identify users in a particular city that are interested in electric cars. CCM 100 may use any demographic information in personal database 148 for filtering query 154.

CCM 100 monitors content accessed from multiple different third-party websites. This allows CCM 100 to better identify the current intent for a wider variety of users, companies, or any other demographics. CCM 100 may use hashed and/or other anonymous identifiers to maintain user privacy. CCM 100 further maintains user anonymity by identifying the intent of generic user segments, such as companies, marketing groups, geographic locations, or any other user demographics.

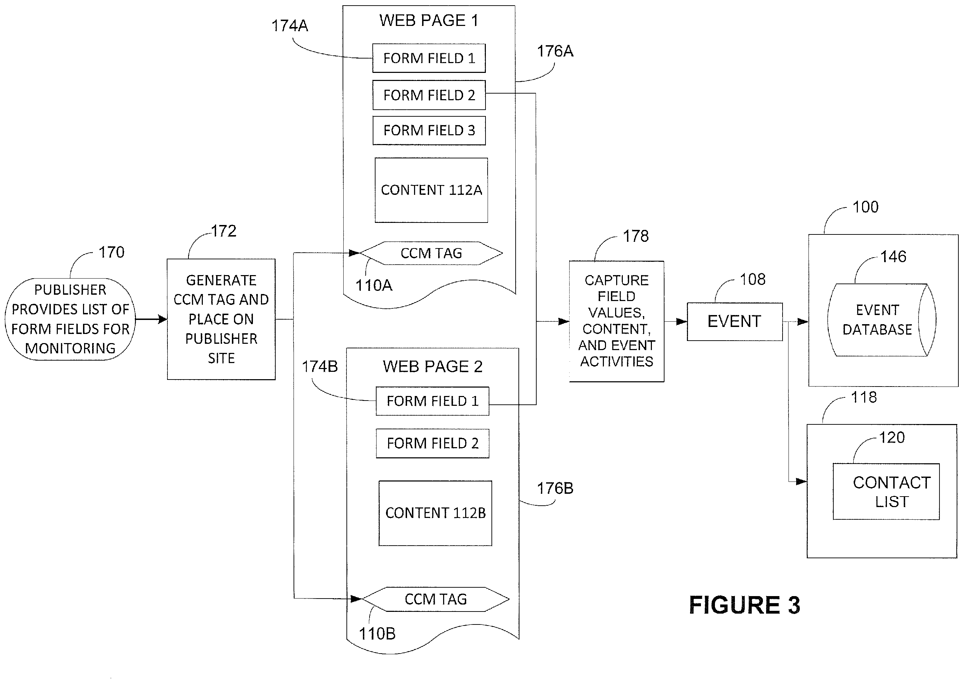

FIG. 3 depicts example operations performed by CCM tags. In operation 170, a publisher provides a list of form fields 174 for monitoring on web pages 176. In operation 172, CCM tags 110 are generated and loaded in web pages 176 on the publisher website. For example, CCM tag 110A is loaded onto a first web page 176A of the publisher website and a CCM tag 110B is loaded onto a second web page 176B of the publisher website. In one example, CCM tags 110 comprise JavaScript loaded into the web page document object model (DOM).

The publisher may download web pages 176, along with CCM tags 110, to user computers during web sessions. CCM tag 110A captures the data entered into some of form fields 174A and CCM tag 110B captures data entered into some of form fields 174B.

A user enters information into form fields 174A and 174B during the web session. For example, the user may enter an email address into one of form fields 174A during a user registration process. CCM tags 110 may capture the email address in operation 178, validate and hash the email address, and then send the hashed email address to CCM 100 in event 108.

CCM tags 100 may first confirm the email address includes a valid domain syntax and then use a hash algorithm to encode the valid email address string. CCM tags 110 also may capture other anonymous user identifiers, such as a cookie identifier. If no identifiers exist, CCM tag 110 may create a unique identifier.

CCM tags 110 may capture any information entered into fields 174. For example, CCM tags 110 also may capture user demographic data, such as company name, age, sex, postal address, etc. In one example, CCM tags 110 capture some the information for publisher contact list 120.

CCM tags 110 also may identify content 112 and associated event activities in operation 178. For example, CCM tag 110A may detect a user downloading a white paper 112A or registering for a seminar. CCM tag 110A captures the URL for white paper 112A and generates an event type identifier that identifies the event as a document download.

Depending on the application, CCM tag 110 in operation 178 sends the captured web session information in event 108 to publisher 118 or to CCM 100. For example, event 108 is sent to publisher 118 when CCM tag 110 is used for generating publisher contact list 120. Event 108 is sent to CCM 100 when CCM tag 110 is used for generating intent data.

CCM tags 110 may capture the web session information in response to the user leaving web page 176, existing one of form fields 174, selecting a submit icon, mousing out of one of form fields 174, mouse clicks, an off focus, or any other user action. Note again that CCM 100 might never receive personally identifiable information (PII) since any PII data in event 108 is hashed by CCM tag 110.

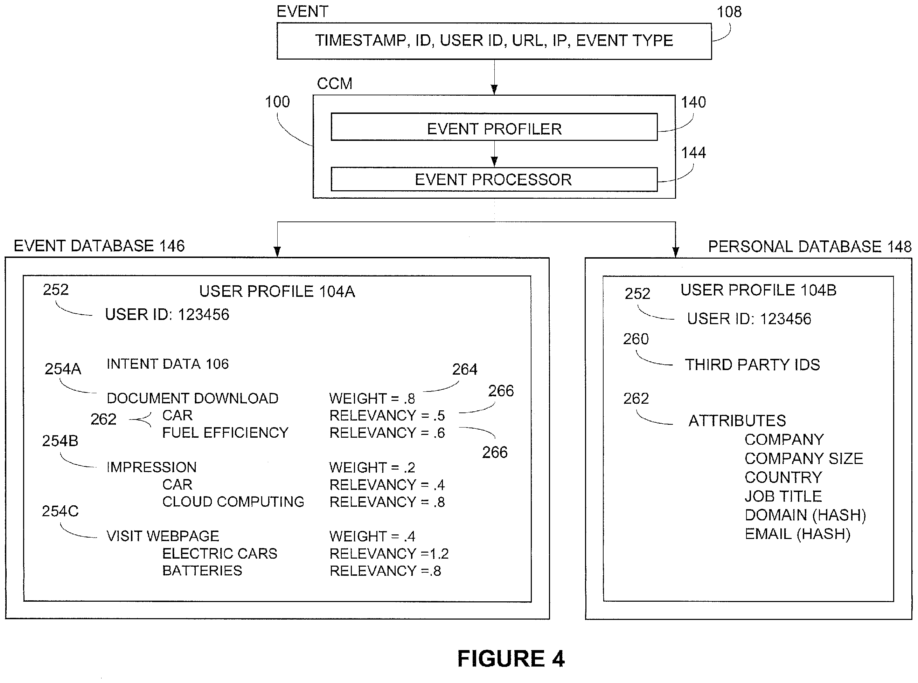

FIG. 4 is a diagram showing how the CCM generates intent data. A CCM tag may send a captured raw event 108 to CCM 100. For example, the CCM tag may send event 108 to CCM 100 in response to a user downloading a white paper. Event 108 may include a timestamp indicating when the white paper was downloaded, an identifier (ID) for event 108, a user ID associated with the user that downloaded the white paper, a URL for the downloaded white paper, and an IP address for the launching platform for the content. Event 108 also may include an event type indicating the user downloaded an electronic document.

Event profiler 140 and event processor 144 may generate intent data 106 from one or more events 108. Intent data 106 may be stored in a structured query language (SQL) database or non-SQL database. In one example, intent data 106 is stored in user profile 104A and includes a user ID 252 and associated event data 254.

Event data 254A is associated with a user downloading a white paper. Event profiler 140 identifies a car topic 262 and a fuel efficiency topic 262 in the white paper. Event profiler 140 may assign a 0.5 relevancy value to the car topic and assign a 0.6 relevancy value to the fuel efficiency topic.

Event processor 144 may assign a weight value 264 to event data 254A. Event processor 144 may assign larger a weight value 264 to more assertive events, such as downloading the white paper. Event processor 144 may assign a smaller weight value 264 to less assertive events, such as viewing a web page. Event processor 144 may assign other weight values 264 for viewing or downloading different types of media, such as downloading a text, video, audio, electronic books, on-line magazines and newspapers, etc.

CCM 100 may receive a second event 108 for a second piece of content accessed by the same user. CCM 100 generates and stores event data 254B for the second event 108 in user profile 104A. Event profiler 140 may identify a first car topic with a relevancy value of 0.4 and identify a second cloud computing topic with a relevancy value of 0.8 for the content associated with event data 254B. Event processor 144 may assign a weight value of 0.2 to event data 254B.

CCM 100 may receive a third event 108 for a third piece of content accessed by the same user. CCM 100 generates and stores event data 254C for the third event 108 in user profile 104A. Event profiler 140 identifies a first topic associated with electric cars with a relevancy value of 1.2 and identifies a second topic associated with batteries with a relevancy value of 0.8. Event processor 144 may assign a weight value of 0.4 to event data 254C.

Event data 254 and associated weighting values 264 may provide a better indicator of user interests/intent. For example, a user may complete forms on a publisher website indicating an interest in cloud computing. However, CCM 100 may receive events 108 for third party content accessed by the same user. Events 108 may indicate the user downloaded a whitepaper discussing electric cars and registered for a seminar related to electric cars.

CCM 100 generates intent data 106 based on received events 108. Relevancy values 266 in combination with weighting values 264 may indicate the user is highly interested in electric cars. Even though the user indicated an interest in cloud computing on the publisher website, CCM 100 determined from the third-party content that the user was actually more interested in electric cars.

CCM 100 may store other personal user information from events 108 in user profile 104B. For example, event processor 144 may store third party identifiers 260 and attributes 262 associated with user ID 252. Third party identifiers 260 may include user names or any other identifiers used by third parties for identifying user 252. Attributes 262 may include an employer company name, company size, country, job title, hashed domain name, and/or hashed email addresses associated with user ID 252. Attributes 262 may be combined from different events 108 received from different websites accessed by the user. CCM 100 also may obtain different demographic data in user profile 104 from third party data sources (whether sourced online or offline).

An aggregator may use user profile 104 to update and/or aggregate intent data for different segments, such as publisher contact lists, companies, job titles, etc. The aggregator also may create snapshots of intent data 106 for selected time periods.

Event processor 144 may generate intent data 106 for both known and unknown users. For example, the user may access a web page and enter an email address into a form field in the web page. A CCM tag captures and hashes the email address and associates the hashed email address with user ID 252.

The user may not enter an email address into a form field. Alternatively, the CCM tag may capture an anonymous cookie ID in event 108. Event processor 144 then associates the cookie ID with user identifier 252. The user may clear the cookie or access data on a different computer. Event processor 144 may generate a different user identifier 252 and new intent data 106 for the same user.

The cookie ID may be used to create a de-identified cookie data set. The de-identified cookie data set then may be integrated with ad platforms or used for identifying destinations for target advertising.

CCM 100 may separately analyze intent data 106 for the different anonymous user IDs. If the user ever fills out a form providing an email address, event processor then may re-associate the different intent data 106 with the same user identifier 252.

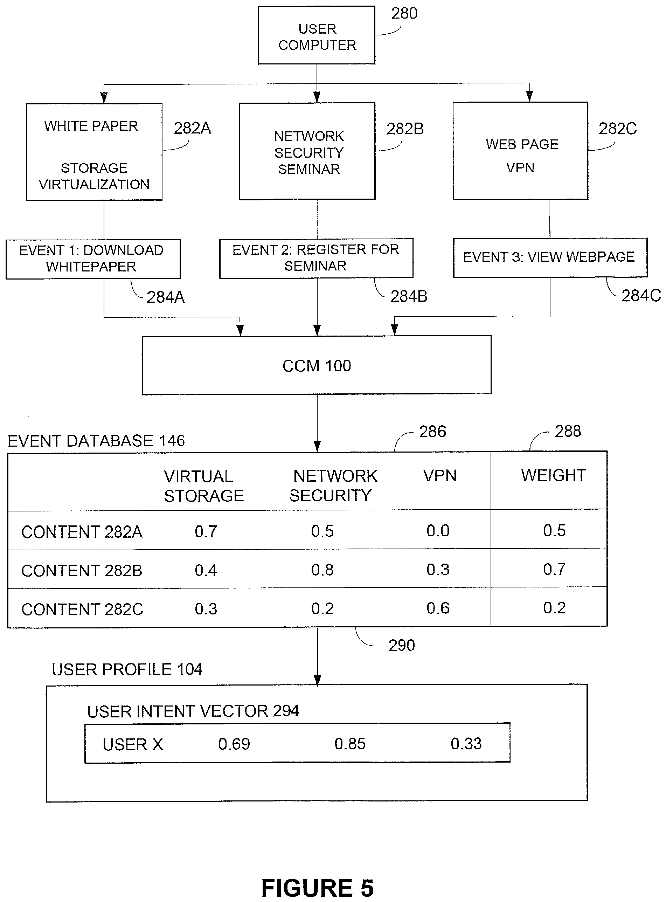

FIG. 5 depicts an example of how the CCM generates a user intent vector from the event data described above in FIG. 4. A user may use computer 280 to access different content 282. For example, the user may download a white paper 282A associated with storage virtualization, register for a network security seminar on a web page 282B, and view a web page article 282C related to virtual private networks (VPNs). Content 282A, 282B, and 282C may come from the same website or come from different websites.

The CCM tags discussed above capture three events 284A, 284B, and 284C associated with content 282A, 282B, and 282C, respectively. CCM 100 identifies topics 286 in content 282A, 282B, and/or 282C. Topics 286 include virtual storage, network security, and VPNs. CCM 100 assigns relevancy values 290 to topics 286 based on known algorithms. For example, relevancy values 290 may be assigned based on the number of times different associated keywords are identified in content 282.

CCM 100 assigns weight values 288 to content 282 based on the associated event activity. For example, CCM 100 assigns a relatively high weight value of 0.7 to a more assertive off-line activity, such as registering for the network security seminar. CCM 100 assigns a relatively low weight value of 0.2 to a more passive on-line activity, such as viewing the VPN web page.

CCM 100 generates a user intent vector 294 in user profile 104 based on the relevancy values 290. For example, CCM 100 may multiply relevancy values 290 by the associated weight values 288. CCM 100 then may sum together the weighted relevancy values for the same topics to generate user intent vector 294.

CCM 100 uses intent vector 294 to represent a user, represent content accessed by the user, represent user access activities associated with the content, and effectively represent the intent/interests of the user. In another embodiment, CCM 100 may assign each topic in user intent vector 294 a binary score of 1 or 0. CCM 100 may use other techniques for deriving user intent vector 294. For example, CCM 100 may weigh the relevancy values based on timestamps.

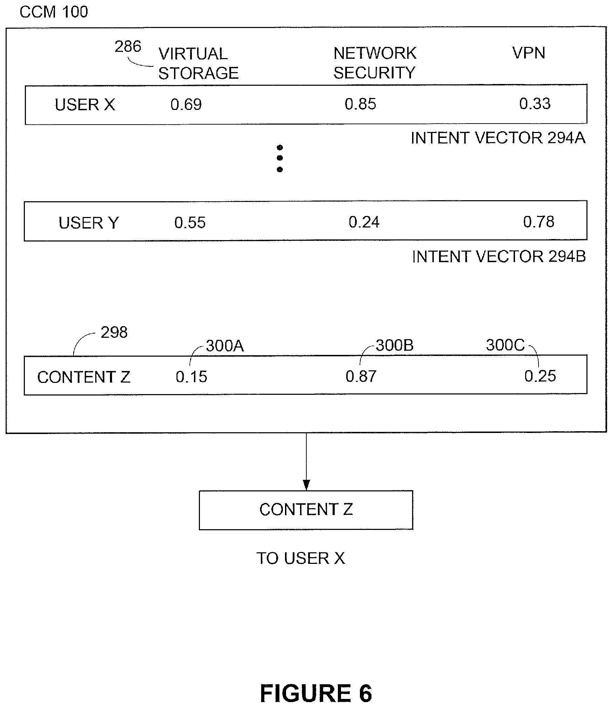

FIG. 6 depicts an example of how the CCM segments users. CCM 100 may generate user intent vectors 294A and 294B for two different users. A publisher may want to email content 298 to a segment of interested users. The publisher submits content 298 to CCM 100. CCM 100 identifies topics 286 and associated relevancy values 300 for content 298.

CCM 100 may use any variety of different algorithms to identify a segment of user intent vectors 294 associated with content 298. For example, relevancy value 300B indicates content 298 is primarily related to network security. CCM 100 may identify any user intent vectors 294 that include a network security topic with a relevancy value above a given threshold value.

In this example, assume the relevancy value threshold for the network security topic is 0.5. CCM 100 identifies user intent vector 294A as part of the segment of users satisfying the threshold value. Accordingly, CCM 100 sends the publisher of content 298 a contact segment that includes the user ID associated with user intent vector 294A. As mentioned above, the user ID may be a hashed email address, cookie ID, or some other encrypted or unencrypted identifier associated with the user.

In another example, CCM 100 calculates vector cross products between user intent vectors 294 and content 298. Any user intent vectors 294 that generate a cross product value above a given threshold value are identified by CCM 100 and sent to the publisher.

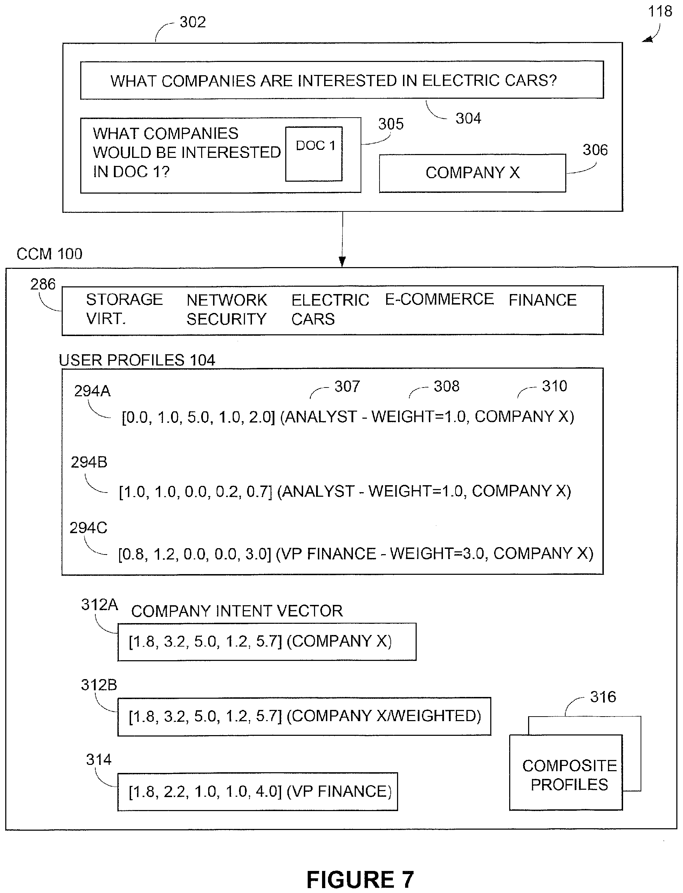

FIG. 7 depicts examples of how the CCM aggregates intent data. In this example, a publisher operating a computer 302 submits a search query 304 to CCM 100 asking what companies are interested in electric cars. In this example, CCM 100 associates five different topics 286 with user profiles 104. Topics 286 include storage virtualization, network security, electric cars, e-commerce, and finance.

CCM 100 generates user intent vectors 294 as described above in FIG. 6. User intent vectors 294 have associated personal information, such as a job title 307 and an employer company name 310. As explained above, users may provide personal information, such as employer name and job title in form fields when accessing a publisher or third-party website.

The CCM tags described above capture and send the job title and employer name information to CCM 100. CCM 100 stores the job title and employer information in the associated user profile 104.

CCM 100 searches user profiles 104 and identifies three user intent vectors 294A, 294B, and 294C associated with the same employer name 310. CCM 100 determines that user intent vectors 294A and 294B are associated with a same job title of analyst and user intent vector 294C is associated with a job title of VP of finance.

In response to, or prior to, search query 304, CCM 100 generates a company intent vector 312A for company X. CCM 100 may generate company intent vector 312A by summing up the topic relevancy values for all of the user intent vectors 294 associated with company X.

In response to search query 304, CCM 100 identifies any company intent vectors 312 that include an electric car topic 286 with a relevancy value greater than a given threshold. For example, CCM 100 may identify any companies with relevancy values greater than 4.0. In this example, CCM 100 identifies company X in search results 306.

In one example, intent is identified for a company at a particular zip code, such as zip code 11201. CCM 100 may take customer supplied offline data, such as from a Customer Relationship Management (CRM) database, and identify the users that match the company and zip code 11201 to create a segment.

In another example, publisher 118 may enter a query 305 asking which companies are interested in a document (DOC 1) related to electric cars. Computer 302 submits query 305 and DOC 1 to CCM 100. CCM 100 generates a topic vector for DOC 1 and compares the DOC 1 topic vector with all known company intent vectors 312A.

CCM 100 may identify an electric car topic in the DOC 1 with high relevancy value and identify company intent vectors 312 with an electric car relevancy value above a given threshold. In another example, CCM 100 may perform a vector cross product between the DOC 1 topics and different company intent vectors 312. CCM 100 may identify the names of any companies with vector cross product values above a given threshold value and display the identified company names in search results 306.

CCM 100 may assign weight values 308 for different job titles. For example, an analyst may be assigned a weight value of 1.0 and a vice president (VP) may be assigned a weight value of 3.0. Weight values 308 may reflect purchasing authority associated with job titles 307. For example, a VP of finance may have higher authority for purchasing electric cars than an analyst. Weight values 308 may vary based on the relevance of the job title to the particular topic. For example, CCM 100 may assign an analyst a higher weight value 308 for research topics.

CCM 100 may generate a weighted company intent vector 312B based on weighting values 308. For example, CCM 100 may multiply the relevancy values for user intent vectors 294A and 294B by weighting value 1.0 and multiply the relevancy values for user intent vector 294C by weighting value 3.0. The weighted topic relevancy values for user intent vectors 294A, 294B, and 294C are then summed together to generate weighted company intent vector 312B.

CCM 100 may aggregate together intent vectors for other categories, such as job title. For example, CCM 100 may aggregate together all the user intent vectors 294 with VP of finance job titles into a VP of finance intent vector 314. Intent vector 314 identifies the topics of interest to VPs of finance.

CCM 100 also may perform searches based on job title or any other category. For example, publisher 118 may enter a query LIST VPs OF FINANCE INTERESTED IN ELECTRIC CARS? The CCM 100 identifies all of the user intent vectors 294 with associated VP finance job titles 307. CCM 100 then segments the group of user intent vectors 294 with electric car topic relevancy values above a given threshold value.

CCM 100 may generate composite profiles 316. Composite profiles 316 may contain specific information provided by a particular publisher or entity. For example, a first publisher may identify a user as VP of finance and a second publisher may identify the same user as VP of engineering. Composite profiles 316 may include other publisher provided information, such as company size, company location, company domain.

CCM 100 may use a first composite profile 316 when providing user segmentation for the first publisher. The first composite profile 316 may identify the user job title as VP of finance. CCM 100 may use a second composite profile 316 when providing user segmentation for the second publisher. The second composite profile 316 may identify the job title for the same user as VP of engineering. Composite profiles 316 are used in conjunction with user profiles 104 derived from other third-party content.

In yet another example, CCM 100 may segment users based on event type. For example, CCM 100 may identify all the users that downloaded a particular article, or identify all of the users from a particular company that registered for a particular seminar.

Consumption Scoring

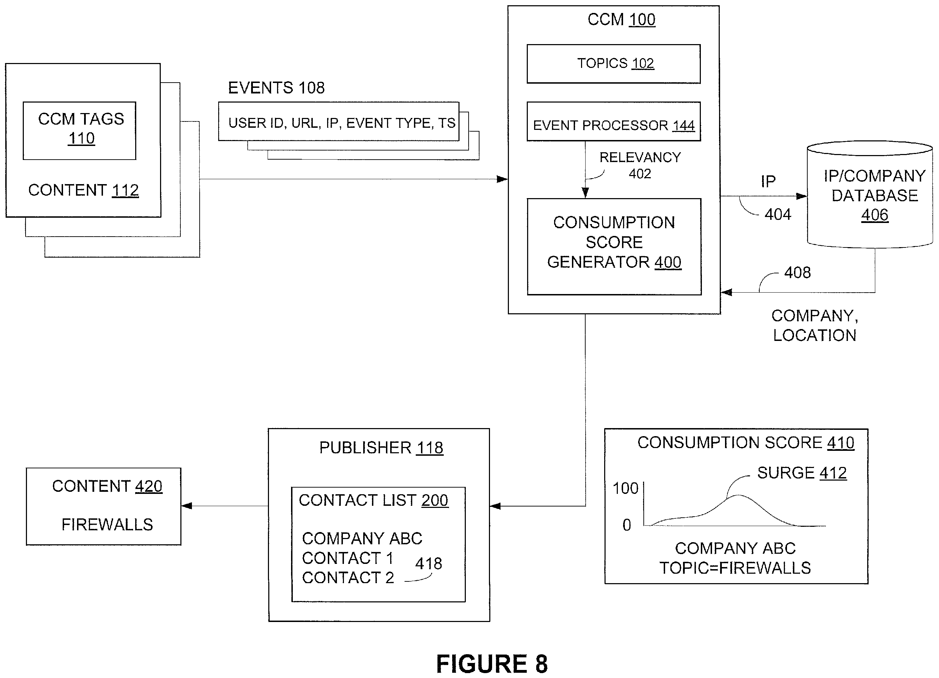

FIG. 8 depicts an example consumption score generator used in CCM 100. As explained above, CCM 100 may receive multiple events 108 associated with different content 112. For example, users may access web browsers, or any other application, to view content 112 on different websites. Content 112 may include any webpage, document, article, advertisement, or any other information viewable or audible by a user. For example, content 112 may include a webpage article or a document related to network firewalls.

CCM tag 110 may capture events 108 identifying content 112 accessed by a user during the web or application session. For example, events 108 may include a user identifier (USER ID), URL, IP address, event type, and time stamp (TS).

The user identifier may be a unique identifier CCM tag 110 generates for a specific user on a specific browser. The URL may be a link to content 112 accessed by the user during the web session. The IP address may be for a network device used by the user to access the Internet and content 112. As explained above, the event type may identify an action or activity associated with content 112. For example, the event type may indicate the user downloaded an electric document or displayed a webpage. The timestamp (TS) may identify a day and time the user accessed content 112.

Consumption score generator (CSG) 400 may access a IP/company database 406 to identify a company/entity and location 408 associated with IP address 404 in event 108. For example, existing services may provide databases 406 that identify the company and company address associated with IP addresses. The IP address and/or associated company or entity may be referred to generally as a domain. CSG 400 may generate metrics from events 108 for the different companies 408 identified in database 406.

In another example, CCM tags 110 may include domain names in events 108. For example, a user may enter an email address into a web page field during a web session. CCM 100 may hash the email address or strip out the email domain address. CCM 100 may use the domain name to identify a particular company and location 408 from database 406.

As also described above, event processor 144 may generate relevancy scores 402 that indicate the relevancy of content 112 with different topics 102. For example, content 112 may include multiple words associate with topics 102. Event processor 144 may calculate relevancy scores 402 for content 112 based on the number and position words associated with a selected topic.

CSG 400 may calculate metrics from events 108 for particular companies 408. For example, CSG 400 may identify a group of events 108 for a current week that include the same IP address 404 associated with a same company and company location 408. CSG 400 may calculate a consumption score 410 for company 408 based on an average relevancy score 402 for the group of events 108. CSG 400 also may adjust the consumption score 410 based on the number of events 108 and the number of unique users generating the events 108.

CSG 400 may generate consumption scores 410 for company 408 for a series of time periods. CSG 400 may identify a surge 412 in consumption scores 410 based on changes in consumption scores 410 over a series of time periods. For example, CSG 400 may identify surge 412 based on changes in content relevancy, number of unique users, and number of events over several weeks. It has been discovered that surge 412 may correspond with a unique period when companies have heightened interest in a particular topic and are more likely to engage in direct solicitations related to that topic.

CCM 100 may send consumption scores 410 and/or any surge indicators 412 to publisher 118. Publisher 118 may store a contact list 200 that includes contacts 418 for company ABC. For example, contact list 200 may include email addresses or phone number for employees of company ABC. Publisher 118 may obtain contact list 200 from any source such as from a customer relationship management (CRM) system, commercial contact lists, personal contacts, third parties lead services, retail outlets, promotions or points of sale, or the like or any combination thereof.

In one example, CCM 100 may send weekly consumption scores 410 to publisher 118. In another example, publisher 118 may have CCM 100 only send surge notices 412 for companies on list 200 surging for particular topics 102.

Publisher 118 may send content 420 related to surge topics to contacts 418. For example, publisher 118 may send email advertisements, literature, or banner ads related to a firewall to contacts 418. Alternatively, publisher 118 may call or send direct mailings regarding firewalls to contacts 418. Since CCM 100 identified surge 412 for a firewall topic at company ABC, contacts 418 at company ABC are more likely to be interested in reading and/or responding to content 420 related to firewalls. Thus, content 420 is more likely to have a higher impact and conversion rate when sent to contacts 418 of company ABC during surge 412.

In another example, publisher 118 may sell a particular product, such as firewalls. Publisher 118 may have a list of contacts 418 at company ABC known to be involved with purchasing firewall equipment. For example, contacts 418 may include the chief technology officer (CTO) and information technology (IT) manager at company ABC. CCM 100 may send publisher 118 a notification whenever a surge 412 is detected for firewalls at company ABC. Publisher 118 then may automatically send content 420 to specific contacts 418 at company ABC with job titles most likely to be interested in firewalls.

CCM 100 also may use consumption scores 410 for advertising verification. For example, CCM 100 may compare consumption scores 410 with advertising content 420 sent to companies or individuals. Advertising content 420 with a particular topic sent to companies or individuals with a high consumption score or surge for that same topic may receive higher advertising rates.

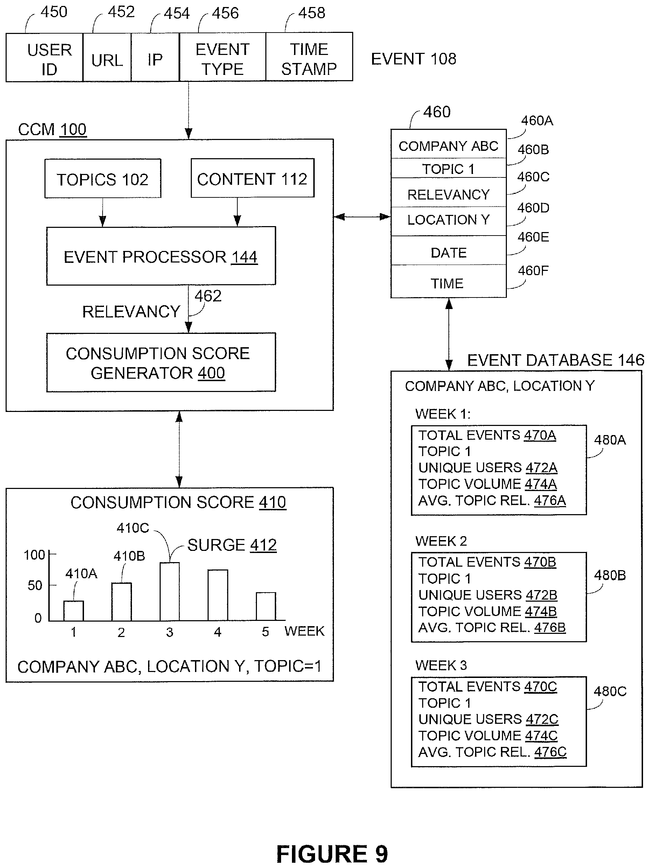

FIG. 9 shows in more detail how CCM 100 generates consumption scores 410. CCM 100 may receive millions of events from millions of different users associated with thousands of different domains every day. CCM 100 may accumulate the events 108 for different time periods, such as for each week. Week time periods are just one example and CCM 100 may accumulate events 108 for any selectable time period. CCM 100 also may store a set of topics 102 for any selectable subject matter. CCM 100 also may dynamically generate some of topics 102 based on the content identified in events 108 as described above.

Events 108 as mentioned above may include a user ID 450, URL 452, IP address 454, event type 456, and time stamp 458. Event processor 144 may identify content 112 located at URL 542 and select one of topics 102 for comparing with content 112. Event processor 144 may generate an associated relevancy score 462 indicating the relevancy of content 112 to selected topic 102. Relevancy score 462 may alternatively be referred to as a topic score.

CSG 400 may generate consumption data 460 from events 108. For example, CSG 400 may identify a company 460A associated with IP address 454. CSG 400 also may calculate a relevancy score 460C between content 112 and the selected topic 460B. CSG 400 also may identify a location 460D for with company 460A and identify a date 460E and time 460F when event 108 was detected.

CSG 400 may generate consumption metrics 480 from consumption data 460. For example, CSG 400 may calculate a total number of events 470A associated with company 460A (company ABC) and location 460D (location Y) for all topics during a first time period, such as for a first week. CSG 400 also may calculate the number of unique users 472A generating the events 108 associated with company ABC and topic 460B for the first week. CSG 400 may calculate for the first week a total number of events generated by company ABC for topic 460B (topic volume 474A). CSG 400 also may calculate an average topic relevancy 476A for the content accessed by company ABC and associated with topic 460B. CSG 400 may generate consumption metrics 480A-480C for sequential time periods, such as for three consecutive weeks.

CSG 400 may generate consumption scores 410 based on consumption metrics 480A-480C. For example, CSG 400 may generate a first consumption score 410A for week 1 and generate a second consumption score 410B for week 2 based in part on changes between consumption metrics 480A for week 1 and consumption metrics 480B for week 2. CSG 400 may generate a third consumption score 410C for week 3 based in part on changes between consumption metrics 480A, 480B, and 480C for weeks 1, 2, and 3, respectively. In one example, any consumption score 410 above as threshold value is identified as a surge 412.

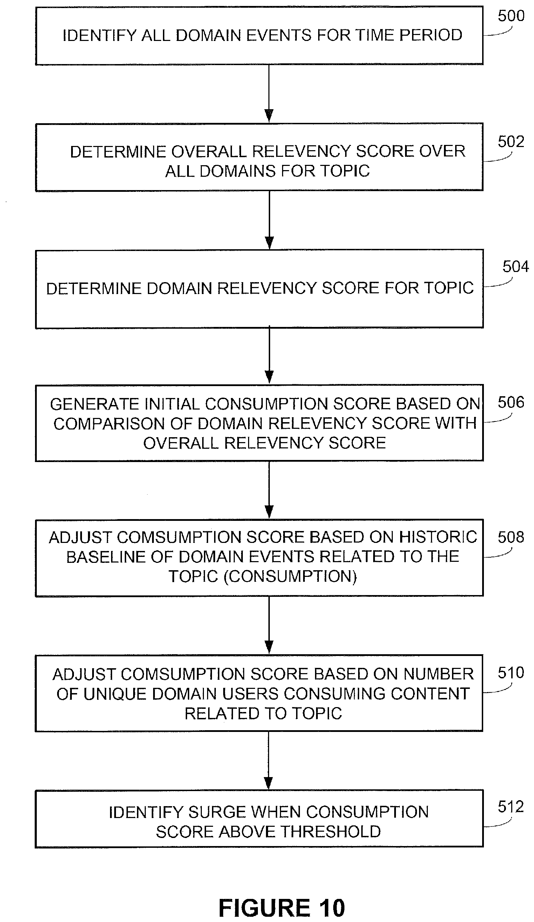

FIG. 10 depicts a process for identifying a surge in consumption scores. In operation 500, the CCM may identify all domain events for a given time period. For example, for a current week the CCM may accumulate all of the events for every IP address (domain) associated with every topic.

The CCM may use thresholds to select which domains to generate consumption scores. For example, for the current week the CCM may count the total number of events for a particular domain (domain level event count (DEC)) and count the total number of events for the domain at a particular location (metro level event count (DMEC)).

The CCM may calculate the consumption score for domains with a number of events more than a threshold (DEC > threshold). The threshold can vary based on the number of domains and the number of events. The CCM may use the second DMEC threshold to determine when to generate separate consumption scores for different domain locations. For example, the CCM may separate subgroups of company ABC events for the cities of Atlanta, New York, and Los Angeles that have each a number events DMEC above the second threshold.

In operation 502, the CCM may determine an overall relevancy score for all selected domains for each of the topics. For example, the CCM for the current week may calculate an overall average relevancy score for all domain events associated with the firewall topic.

In operation 504, the CCM may determine a relevancy score for a specific domain. For example, the CCM may identify a group of events having a same IP address associated with company ABC. The CCM may calculate an average domain relevancy score for the company ABC events associated with the firewall topic.

In operation 506, the CCM may generate an initial consumption score based on a comparison of the domain relevancy score with the overall relevancy score. For example, the CCM may assign an initial low consumption score when the domain relevancy score is a certain amount less than the overall relevancy score. The CCM may assign an initial medium consumption score larger than the low consumption score when the domain relevancy score is around the same value as the overall relevancy score. The CCM may assign an initial high consumption score larger than the medium consumption score when the domain relevancy score is a certain amount greater than the overall relevancy score. This is just one example, and the CCM may use any other type of comparison to determine the initial consumption scores for a domain/topic.

In operation 508, the CCM may adjust the consumption score based on a historic baseline of domain events related to the topic. This is alternatively referred to as consumption. For example, the CCM may calculate the number of domain events for company ABC associated with the firewall topic for several previous weeks.

The CCM may reduce the current week consumption score based on changes in the number of domain events over the previous weeks. For example, the CCM may reduce the initial consumption score when the number of domain events fall in the current week and may not reduce the initial consumption score when the number of domain events rises in the current week.

In operation 510, the CCM may further adjust the consumption score based on the number of unique users consuming content associated with the topic. For example, the CCM for the current week may count the number of unique user IDs (unique users) for company ABC events associated with firewalls. The CCM may not reduce the initial consumption score when the number of unique users for firewall events increases from the prior week and may reduce the initial consumption score when the number of unique users drops from the previous week.

In operation 512, the CCM may identify surges based on the adjusted weekly consumption score. For example, the CCM may identify a surge when the adjusted consumption score is above a threshold.

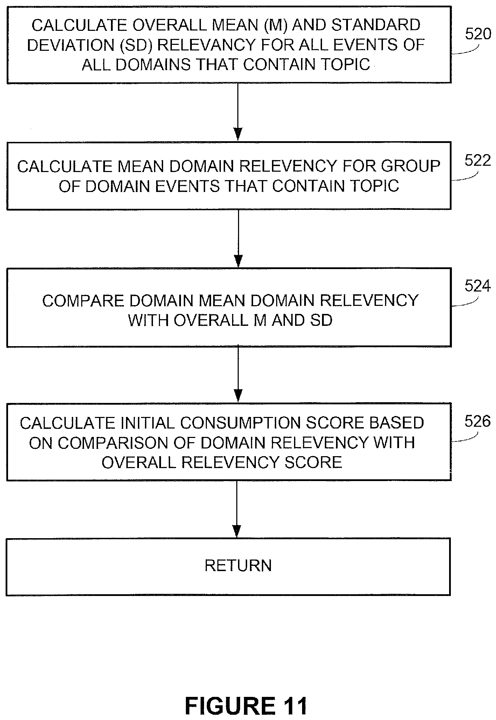

FIG. 11 depicts in more detail the process for generating an initial consumption score. It should be understood this is just one example scheme and a variety of other schemes also may be used.

In operation 520, the CCM may calculate an arithmetic mean (M) and standard deviation (SD) for each topic over all domains. The CCM may calculate M and SD either for all events for all domains that contain the topic, or alternatively for some representative (big enough) subset of the events that contain the topic. The CCM may calculate the overall mean and standard deviation as follows:

Mean:

$$M = \frac{1}{n} * \sum_1^n x_i$$

Standard deviation:

$$SD = \sqrt{\frac{1}{n-1}\sum_1^n(x_i - M)^2}$$

Where $x_i$ is a topic relevancy and n is a total number of events.

In operation 522, the CCM may calculate a mean (average) domain relevancy for each group of domain and/or domain/metro events for each topic. For example, for the past week the CCM may calculate the average relevancy for company ABC events for firewalls.

In operation 524, the CCM may compare the domain mean relevancy with the overall mean (M) relevancy and over standard deviation (SD) relevancy for all domains. For example, the CMM may assign three different levels to the domain mean relevancy (DMR).

| | |
|---|---|
| Low: $DMR < M - 0.5 * SD$ | ~ 33% of all values |
| Medium: $M - 0.5 * SD < DMR < M + 0.5 * SD$ | ~ 33% of all values |
| High: $DMR > M + 0.5 * SD$ | ~ 33% of all values |

In operation 526, the CCM may calculate an initial consumption score for the domain/topic based on the above relevancy levels. For example, for the current week the CCM may assign one of the following initial consumption scores to the company ABC firewall topic. Again, this just one example of how the CCM may assign an initial consumption score to a domain/topic.

Relevancy = High: initial consumption score = 100

Relevancy = Medium: Initial consumption score = 70

Relevancy = Low: Initial consumption score 40.

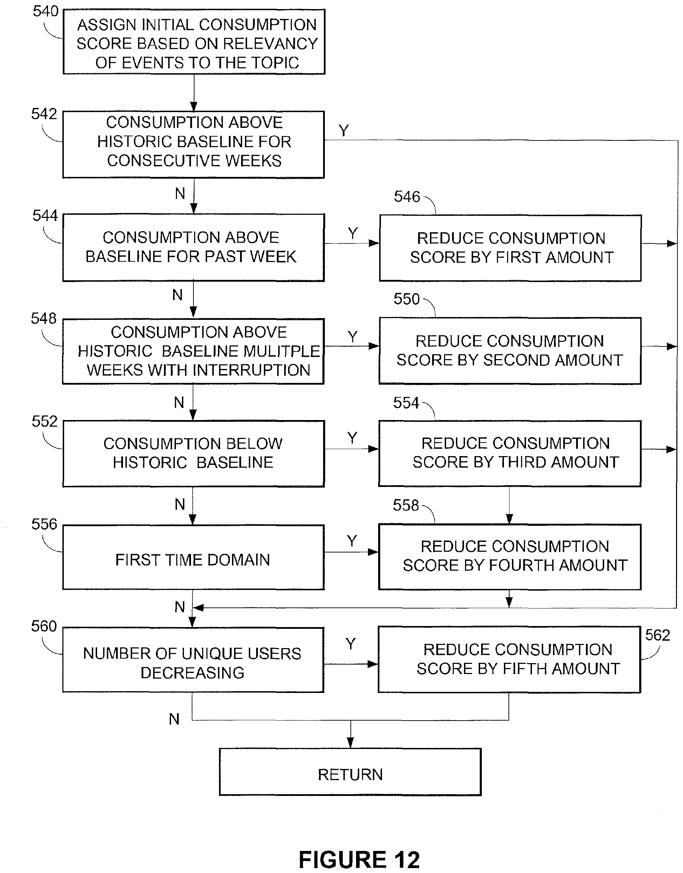

FIG. 12 depicts one example of how the CCM may adjust the initial consumption score. These are also just examples and the CCM may use other schemes for calculating a final consumption score. In operation 540, the CCM may assign an initial consumption score to the domain/location/topic as described above in FIG. 11.

The CCM may calculate a number of events for domain/location/topic for a current week. The number of events is alternatively referred to as consumption. The CCM also may calculate the number of domain/location/topic events for previous weeks and adjust the initial consumption score based on the comparison of current week consumption with consumption for previous weeks.

In operation 542, the CCM may determine if consumption for the current week is above historic baseline consumption for previous consecutive weeks. For example, the CCM may determine is the number of domain/location/topic events for the current week is higher than an average number of domain/location/topic events for at least the previous two weeks. If so, the CCM may not reduce the initial consumption value derived in FIG. 11.

If the current consumption is not higher than the average consumption in operation 542, the CCM in operation 544 may determine if the current consumption is above a historic baseline for the previous week. For example, the CCM may determine if the number of domain/location/topic events for the current week is higher than the average number of domain/location/topic events for the previous week. If so, the CCM in operation 546 may reduce the initial consumption score by a first amount.

If the current consumption is not above than the previous week consumption in operation 544, the CCM in operation 548 may determine if the current consumption is above the historic consumption baseline but with interruption. For example, the CCM may determine if the number of domain/location/topic events has fallen and then risen over recent weeks. If so, the CCM in operation 550 may reduce the initial consumption score by a second amount.

If the current consumption is not above than the historic interrupted baseline in operation 548, the CCM in operation 552 may determine if the consumption is below the historic consumption baseline. For example, the CCM may determine if the current number of domain/location/topic events is lower than the previous week. If so, the CCM in operation 554 may reduce the initial consumption score by a third amount.

If the current consumption is above the historic base line in operation 552, the CCM in operation 556 may determine if the consumption is for a first time domain. For example, the CCM may determine the consumption score is being calculated for a new company or for a company that did not previously have enough events to qualify for calculating a consumption score. If so, the CCM in operation 558 may reduce the initial consumption score by a fourth amount.

In one example, the CCM may reduce the initial consumption score by the following amounts. This of course is just an example and the CCM may use any values and factors to adjust the consumption score.

Consumption above historic baseline consecutive weeks (operation 542). - 0

Consumption above historic baseline past week (operation 544). - 20 (first amount).

Consumption above historic baseline for multiple weeks with interruption (operation 548) - 30 (second amount).

Consumption below historic baseline (operation 552). - 40 (third amount).

First time domain (domain/metro) observed (operation 556). - 30 (fourth amount).

As explained above, the CCM also may adjust the initial consumption score based on the number of unique users. The CCM tags 110 in FIG. 8 may include cookies placed in web browsers that have unique identifiers. The cookies may assign the unique identifiers to the events captured on the web browser. Therefore, each unique identifier may generally represent a web browser for a unique user. The CCM may identify the number of unique identifiers for the domain/location/topic as the number of unique users. The number of unique users may provide an indication of the number of different domain users interested in the topic.

In operation 560, the CCM may compare the number of unique users for the domain/location/topic for the current week with the number of unique users for the previous week. The CCM may not reduce the consumption score if the number of unique users increases over the previous week. When the number of unique users decrease, the CCM in operation 562 may further reduce the consumption score by a fifth amount. For example, the CCM may reduce the consumption score by 10.

The CCM may normalize the consumption score for slower event days, such as weekends. Again, the CCM may use different time periods for generating the consumption scores, such as each month, week, day, hour, etc. The consumption scores above a threshold are identified as a surge or spike and may represent a velocity or acceleration in the interest of a company or individual in a particular topic. The surge may indicate the company or individual is more likely to engage with a publisher who presents content similar to the surge topic.

Consumption DNA

One advantage of domain based surge detection is that a surge can be identified for a company without using personally identifiable information (PII) of the company employees. The CCM derives the surge data based on a company IP address without using PII associated with the users generating the events.

In another example, the user may provide PII information during web sessions. For example, the user may agree to enter their email address into a form prior to accessing content. As described above, the CCM may hash the PII information and include the encrypted PII information either with company consumption scores or with individual consumption scores.

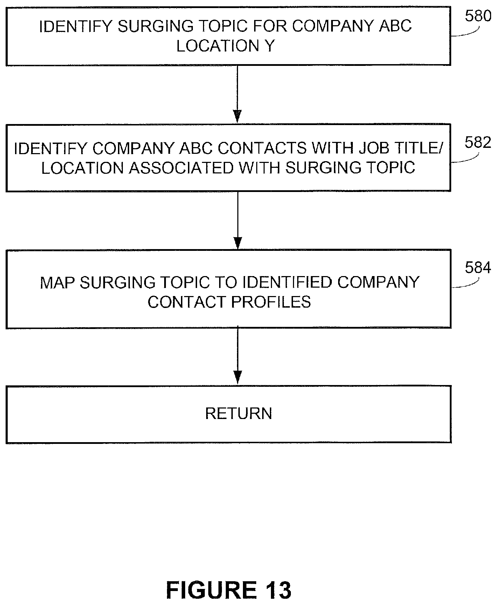

FIG. 13 shows one example process for mapping domain consumption data to individuals. In operation 580, the CCM may identify a surging topic for company ABC at location Y as described above. For example, the CCM may identify a surge for company ABC in New York for firewalls.

In operation 582, the CCM may identify users associated with company ABC. As mentioned above, some employees at company ABC may have entered personal contact information, including their office location and/or job titles into fields of web pages during events 108. In another example, a publisher or other party may obtain contact information for employees of company ABC from CRM customer profiles or third-party lists.

Either way, the CCM or publisher may obtain a list of employees/users associated with company ABC at location Y. The list also may include job titles and locations for some of the employees/users. The CCM or publisher may compare the surge topic with the employee job titles. For example, the CCM or publisher may determine that the surging firewall topic is mostly relevant to users with a job title such as engineer, chief technical officer (CTO), or information technology (IT).

In operation 584, the CCM or publisher maps the surging firewall topic to profiles of the identified employees of company ABC. In another example, the CCM or publisher may not be as discretionary and map the firewall surge to any user associated with company ABC. The CCM or publisher then may direct content associated with the surging topic to the identified users. For example, the publisher may direct banner ads or emails for firewall seminars, products, and/or services to the identified users.

Consumption data identified for individual users is alternatively referred to as Dino DNA and the general domain consumption data is alternatively referred to as frog DNA. Associating domain consumption and surge data with individual users associated with the domain may increase conversion rates by providing more direct contact to users more likely interested in the topic.

Intent Measurement

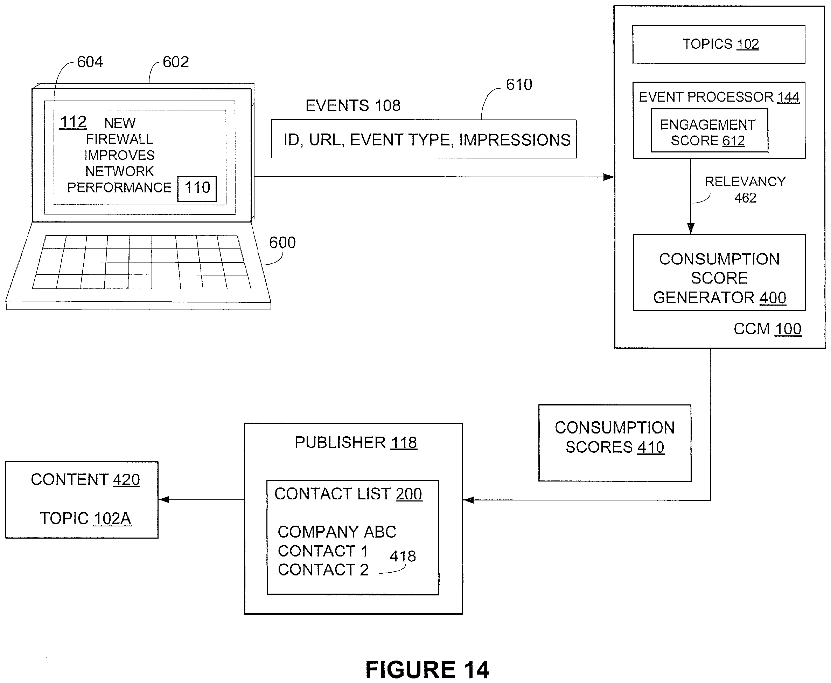

FIG. 14 depicts how CCM 100 may calculate consumption scores based on user engagement. A computer 600 may comprise a laptop, smart phone, tablet or any other device for accessing content 112. In this example, a user may open a web browser 604 on a screen 602 of computer 600. CCM tag 110 may operate within web browser 604 and monitor user web sessions. As explained above, CCM tag 110 may generate events 108 for the web session that include an identifier (ID), a URL for content 112, and an event type that identifies an action or activity associated with content 112. For example, CCM tag 110 may add an event type identifier into event 108 indicating the user downloaded an electric document.

In one example, CCM tag 110 also may generate a set of impressions 610 indicating actions taken by the user while viewing content 112. For example, impressions 610 may indicate how long the user dwelled on content 112 and/or how the user scrolled through content 112. Impressions 610 may indicate a level of engagement or interest the user has in content 112. For example, the user may spend more time on the web page and scroll through web page at a slower speed when the user is more interested in the content 112.

CCM 100 may calculate an engagement score 612 for content 112 based on impressions 610. CCM 100 may use engagement score 612 to adjust a relevancy score 402 for content 112. For example, CCM 100 may calculate a larger engagement score 612 when the user spends a larger amount of time carefully paging through content 112. CCM 100 then may increase relevancy score 402 of content 112 based on the larger engagement score 612. CSG 400 may adjust consumption scores 410 based on the increased relevancy 402 to more accurately identify domain surge topics. For example, a larger engagement score 612 may produce a larger relevancy 402 that produces a larger consumption score 410.

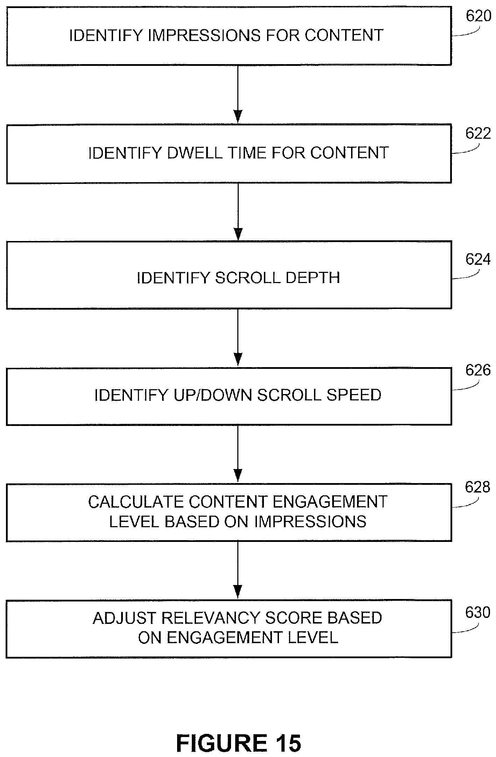

FIG. 15 depicts an example process for calculating the engagement score for content. In operation 620, the CCM may receive events that include content impressions. For example, the impressions may indicate any user interaction with content including tab selections that switch to different pages, page movements, mouse page scrolls, mouse clicks, mouse movements, scroll bar page scrolls, keyboard page movements, touch screen page scrolls, or any other content movement or content display indicator.

In operation 622, the CCM may identify the content dwell time. The dwell time may indicate how long the user actively views a page of content. In one example, tag 110 may stop a dwell time counter when the user changes page tabs or becomes inactive on a page. Tag 110 may start the dwell time counter again when the user starts scrolling with a mouse or starts tabbing.

In operation 624, the CCM may identify from the events a scroll depth for the content. For example, the CCM may determine how much of a page the user scrolled through or reviewed. In one example, the CCM tag or CCM may convert a pixel count on the screen into a percentage of the page.

In operation 626, the CCM may identify an up/down scroll speed. For example, dragging a scroll bar may correspond with a fast scroll speed and indicate the user has less interest in the content. Using a mouse wheel to scroll through content may correspond with a slower scroll speed and indicate the user is more interested in the content.

The CCM may assign higher values to impressions that indicate a higher user interest and assign lower values to impressions that indicate lower user interest. For example, the CCM may assign a larger value in operation 622 when the user spends more time actively dwelling on a page and may assign a smaller value when the user spends less time actively dwelling on a page.

In operation 628, the CCM may calculate the content engagement score based on the values derived in operations 622-628. For example, the CCM may add together and normalize the different values derived in operations 622-628.

In operation 630, the CCM may adjust content relevancy values described above in FIGS. 1-7 based on the content engagement score. For example, the CCM may increase the relevancy value when the content has a high engagement score and decrease the relevancy for a lower engagement score.

CCM 100 or CCM tag 110 in FIG. 14 may adjust the values assigned in operations 622-626 based on the type of device 600 used for viewing the content. For example, the dwell times, scroll depths, and scroll speeds, may vary between smart phone, tablets, laptops and desktop computers. CCM 100 or tag 110 may normalize or scale the impression values so different devices provide similar relative user engagement results.

Website Classification

It may be difficult to identify company purchasing intent based on brief user visits to a webpage that contains little content. However, a pattern of users visiting multiple vendor sites associated with the same topic during the same time period may identify a more urgent topic. A site classifier may adjust relevancy scores based on different website classifications and produce surge signals that better indicate a company interest is purchasing a particular product or service.

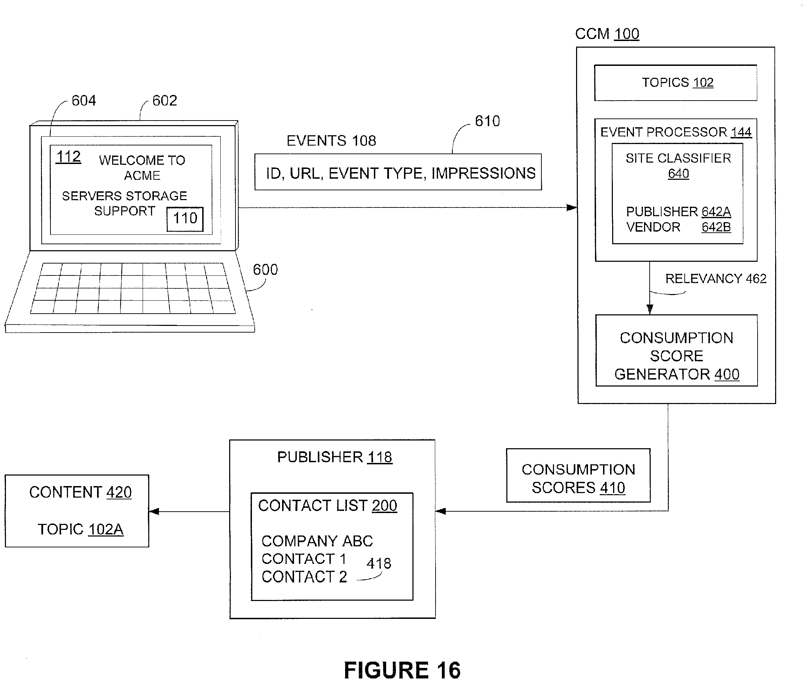

FIG. 16 depicts how CCM 100 may calculate consumption scores based on website classifications. Computer 600 may comprise a laptop, smart phone, tablet or any other device for accessing content 112. In this example, a user may open a web browser 604 on a screen 602 of computer 600. CCM tag 110 may operate within web browser 604 and monitor user web sessions. As explained above, CCM tag 110 may generate events 108 for the web session that include an identifier (ID), a URL for content 112, and an event type that identifies an action or activity associated with content 112. For example, CCM tag 110 may add an event type identifier into event 108 indicating the user downloaded an electronic document.

As also explained above, CCM tag 110 may generate a set of impressions 610 for actions taken by the user while viewing content 112. For example, impressions 610 may indicate how long the user dwelled on content 112 and/or how the user scrolled through content 112. Impressions 610 may indicate a level of engagement or interest the user has in content 112. For example, the user may spend more time on the web page and scroll through the web page at a slower speed when the user is more interested in the content 112.

CCM 100 may adjust consumption scores 410 based on the type of website 642 containing content 112. For example, a first type of website 642A may be associated with a publisher, such as a news reporting company or a blog site. A second type of website 642B may be associated with a vendor, such as a manufacturer or retailer that sells products or services. CCM 100 may adjust relevancy score 402 and resulting consumption scores 410 based on content 112 being located on publisher website 642A or located on vendor website 642B.

For example, it has been discovered that a user may be closer to making a purchase decision when viewing content on a vendor website 642B compared to viewing similar content on a publisher website 642A. Accordingly, CCM 100 may increase relevancy score 402 associated with content 112 located on a vendor website 642A.

CCM 100 may use the increased relevancy score 462 to calculate consumption scores 410 as described above. The website classification based consumption scores 410 may identify surges 412 as shown in FIG. 9 that more accurately indicate when companies are ready to purchase products or services associated with topics 102.

A publisher website may refer to any website that focuses more on providing informational content compared to content primarily directed to selling products or services. For example, the publisher may be a news service or blog that displays news articles and commentary or a service organization or marketer that publish content. The vendor website contain content primarily directed toward selling products or services and may include websites operated by manufacturers, retailers, or any other intermediary.

The example explanations below refer to publisher websites and vendor websites. However, it should be understood that the schemes described below may be used to classify any type of website that may have an associated structure, content, or type of user engagement. It should also be understood that the classification schemes described below may be used for classifying any group of content including different content located on the same website or content located for example on servers or cloud systems.

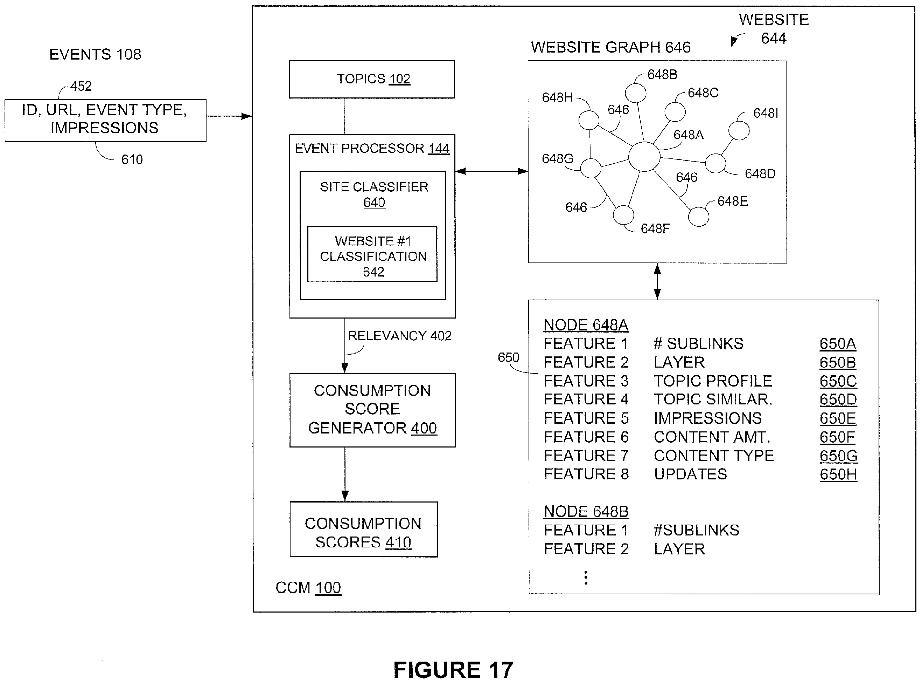

FIG. 17 shows how site classifier 640 operates in more detail. Site classifier 640 may generate graphs 646 for websites 644 accessed by users. Graph 646 may include multiple nodes 644 each associated with a piece of content on website 644. For example, each node 648 may represent a web page on website 644. Graph 646 also may include sublinks 646 identifying the relationships between the different nodes 648. For example, a first home page 648A on website 644 may include sublinks to web pages 648B-644H. Web page 648G may include second level sublinks 646 to web pages 648H and 648F. Web page 648D may include a second level sublink 646 to webpage 648I.

Site classifier 640 may classify website 644 based on the structure of graph 646. For example, home page 648A in graph 646 may include sublinks 646 to many sub-web pages 648B-648H. Graph 646 also may include only a few web page sublevels below home page 648A. For example, nodes 648B-648H are located on a first sublevel below home page 648A. Only one additional webpage sublevel exists that includes webpage 648I.

A website 644 with a home page 648A with a relatively large number of sublinks 646 to a large number of first level subpages 648B-648H more likely represent a vendor website 644. For example, a vendor website may include multiple products or services all accessed through the home page. Further, a vendor website 644 may have a relatively small number of lower level sublinks 646 and associated web page sublevels (shallow depth). In this example, site classifier 640 may predict website 644 as associated with a vendor.

In another example, home page 648A may include relatively few sublinks 646 to other webpages 648. Further, there may be many more sublayers of webpages 648 linked to other webpages. In other words, graph 646 may have a deeper tree structure. In this example, site classifier 640 may predict website 644 as associated with a publisher.

Based on the structure of graph 646 in FIG. 17, site classifier 640 may predict website 644 is a vendor website. A company accessing a vendor website may indicate more urgency in a company intent to purchase a product associated with the website. Accordingly, site classifier 640 may increase the relevancy scores 462 produced from content 112 accessed from vendor website 644.

This is just one example of how site classifier 640 may classify websites 644 based on an associated webpage structure. Site classifier 640 also may classify websites 644 based on other features 650 extracted from the HTML in the webpages at the URLs 452 identified in events 108.

Site classifier 640 may first determine if a graph 646 already exists for the website 644 associated with URL 452 in event 108. If a graph 646 already exists, site classifier 640 may check a time stamp in event 108 with a time stamp assigned to graph 646. If a graph 646 has not been created for website 644 or the graph needs updating, site classifier 640 may download the HTML for the webpages on website 644.

Site classifier 640 extracts features 650 for each node/webpage 648 and generates associated graph 646. For each node 648, site classifier 640 may identify the number of sublinks 650A contained in the HTML. Site classifier 640 also may identify the sublayer location 650B of node 648 within graph 646. For example, site classifier 640 may identify the fewest number of sublinks 646 separating a node 648 from homepage node 648A.

After identifying sublinks 650B for each node 648, site classifier 640 may derive graph 646 identifying the relationships between each node 648. While shown graphically in FIG. 17, graph 646 may also or alternatively be generated in a table format that identifies the relationships between different nodes 648 and provides additional graph metrics, such as the number of node layers, the number of nodes on each node layer, and the number of links for each node layer.

As mentioned above, the number of sublinks 650A and/or the association of links 646 with other nodes 648 may indicate the structure and associated type of website 644. A deeper tree structure with more lower level nodes 648 linked to other lower level nodes 648 may indicate a publisher website 644. A shallower tree structure with fewer node levels or fewer links at higher node levels may indicate a vendor website 644

Site classifier 640 may generate a topic profile 650A for each node 648. For example, event processor 144 may use content analyzer 142 in FIG. 2 to identify a set of topics contained in the webpage. Topic profile 650A may provide an aggregated view of content on node 648. Site classifier 640 also may generate topic similarity values 650D indicating the similarity of topics on a particular node 648 with topics on other linked nodes 648 on a higher graph level, the same graph level, lower graph levels, or the similarity with topics for unlinked nodes on the same or other graph levels.

The relationships between topics on different nodes 648 also may indicate the type of webpage 648. For example, nodes 648 on a publisher website 644 may be more disparate and have a wider variety of topics 650C than nodes 648 on a vendor website 644. In another example, similar topics for nodes 648 on a same graph level or nodes on a same branch of graph 646 may more likely represent a vendor website.

Site classifier 640 may identify topic similarities 650D by identifying the topics on a first webpage, such as home webpage 648A. Site classifier 640 then compares the home page topics with the content on a second web page. Content analyzer 142 in FIG. 2 then generates a set of relevancy scores indicating the relevancy or similarity of the second webpage to the home page. Of course, site classifier 640 may use other natural language processing schemes to identify topic similarities between different nodes 648. Site classifier 640 may generate topic similarities 650D between any linked nodes 648, nodes associated with a same or different graph levels, or any other node relationship.

Site classifier 640 also may generate impressions 650E for each webpage 648. As described above in FIGS. 14 and 15, CCM 100 may generate consumption scores 410 and identify company surges 412 based on user impressions 610. As explained above, impressions 650E may indicate a level of engagement or interest the user has the webpage 648. For example, impressions 650E may indicate how long the user dwelled on a particular webpage 648 and/or how the user scrolled through content in the webpage 648. The user may spend more time on a webpage and scroll at a slower speed when more interested in the web page content 112.

Site classifier 640 may use impressions 650E to classify website 644. For example, users on a publisher news website 644 may on average spend more time reading articles on individual webpages 648 and may scroll multiple times through relatively long articles. Users on a vendor website 644 may on average spend less time viewing different products and scroll less on relatively short webpages 648. A user also may access a publisher news website more frequently, such as every day or several times a day. The user may access vendor websites 644 much less frequently, such as only when interested in purchasing a particular product.

In addition, users may spend more time on more web pages of a publisher website when there is a particular news story of interest that may be distributed over several publisher news stories. This additional engagement on the publisher website could be mistakenly identified as a company surge, when actually the additional engagement is due to a non-purchasing related news topic. On the other hand, users from a same company viewing multiple vendor websites within a relatively short time period, and/or the users viewing the vendor websites with additional engagement, may represent an increased company urgency to purchase a particular product.

Site classifier 640, or another module in event processor 144, may generate engagement scores 612 for each node 648 on website 644 as described above in FIGS 14 and 15. Site classifier 640 then may classify website 644 as a publisher based at least partially on webpages 648 having higher engagement scores where users on average spend more time on the webpages, and visit the webpages more frequently. Site classifier 640 may classify website 644 as a vendor website based at least partially on webpages 648 having lower engagement scores where users spend less time on the webpage and visit the webpage less frequently, or have more isolated engagement score increases. In addition, site classifier 640 may classify website 644 as a vendor when the users view content associated with pricing.

Site classifier 640 may generate an average engagement score 612 for the webpages 648 on the same website 644. Site classifier 640 may increase relevancy score 402 when the amount and pattern of engagement scores 612 indicate a vendor website 644 and may reduce relevancy score 402 when the amount and pattern of engagement score 612 indicates a publisher website 644.

Different types of websites may contain different amounts of content. For example, individual webpages 648 on a publisher website 644 may generally contain more text (deeper content) than individual webpages 648 on a vendor website (shallower content). Site classifier 640 may calculate amounts of content 650F for individual webpages 648 in website 644. For example, site classifier 640 may count the number of words, paragraphs, documents, pictures, videos, images, etc. contained in individual webpages 648.

Site classifier 640 may calculate an average amount of content 650F in nodes 648 on the same website 644. An average content amount above some threshold may more likely represent a publisher website 644 and an average amount of content 650F below some threshold may more likely represent a vendor website 644. Site classifier 640 may increase relevancy score 402 when the average amount of content 650F indicates a vendor website 644 and may reduce relevancy score 402 when the average amount of content 650F indicates a publisher website 644.

Different types of websites may contain different types of content. For example, publisher websites 644 may contain more advertisements than vendor website 644. In another example, vendor sites may have a "contact us" webpage, product webpages, purchase webpages, etc. A "contact us" link in a publisher website may be hidden in several levels of webpages compared with a vendor website where the "contact us" link may be located on the home page. A vendor website also may have a more prominent hiring/careers webpage.

Site classifier 640 may identify different types and locations of content 650F in the webpage HTML. For example, site classifier 640 may identify Iframes in the webpage HTML. An IFrame (Inline Frame) is an HTML document embedded inside another HTML document and is often used to insert content from another source, such as an advertisement.

Other types of content 650G may be associated with particular types of websites 644. For example, vendor websites may include more webpages associated with employment opportunities or include webpages identifying the management team of the company. In another example, both publisher webpages and vendor webpages may include links to employment opportunities. However, vendor websites may more frequently locate a prominent link from homepage to employment opportunities publisher websites may more frequently embed links to the employment opportunities among many other links to publisher news content. The total number of links from a vendor homepage may be less and a "Careers" page link will be, say, 1 out of 10 total links. A publisher homepage may have many more links and include the careers opportunity link nested within them.

Site classifier 640 also may classify websites 644 based on these other types of content 650G and locations of content 650G. Site Classifier may also identify "infinite scroll" techniques or "virtual page views" that allow a website visitor to continually scroll down an article, and, at end of content, produce a new article to continue reading within the same page without clicking a link. Examples: Forbes.com / BusinessInsider.com.

Site classifier 640 also may classify website 655 based on frequency of content updates 650H. For example, a publisher site may update and/or replace webpage content, such as news articles, more frequently than a vendor website replaces webpage content for products or services. Site classifier 640 may identify topics on the webpages 648 of website 644 every day, week, or month. Site classifier 640 may generate an update value 650H indicating the frequently of topics changes on the webpages and/or website. A higher update value 650H may indicate a publisher site and a lower update value may indicate a vendor website.

Site classifier 640 may use any combination of features 650 to classify website 644. Site classifier 640 also may weight some features 650 higher than other features. For example, site classifier 640 may assign a higher vendor score to a website 644 identified with a shallow graph structure 646 compared with identifying website 644 with relatively shallow content 650F. Site classifier 640 generates a classification value for website 644 based on the combination of features 650 and associated weights. Site classifier 640 then adjusts relevancy 402 based on the classification value. For example, site classifier 640 may increase relevancy score 402 or consumption score 410 more for a larger vendor classification value and may decrease relevancy score 402 or consumption score 410 more for a larger publisher classification value.

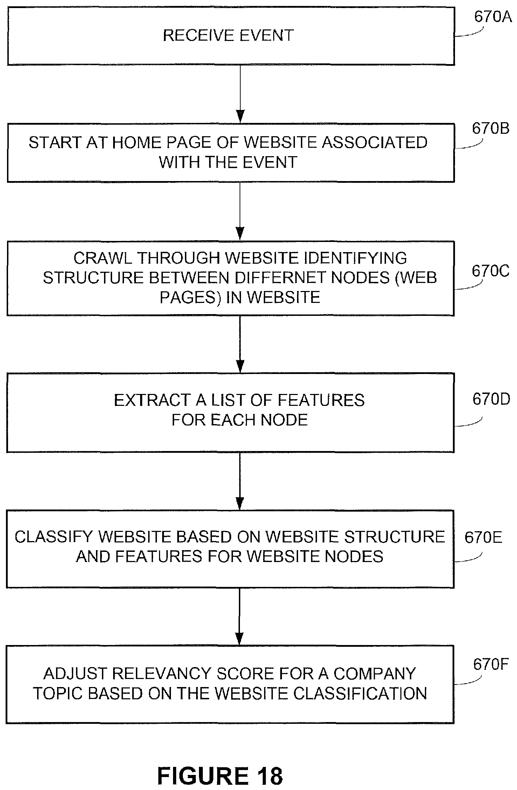

FIG. 18 shows an example process for identifying company surge scores based on website classifications. In operation 670A, the site classifier may receive an event that includes a user ID, URL, event type, impressions, and any other information identifying content or an activity on a webpage. The site classifier first may determine if a graph 646 already exists on the website associated with the URL. If an up to date graph 646 exists, the site classifier may have already classified the website. If so, site classifier may adjust any derived relevancy scores based on the website classification.

Otherwise, the site classifier in operation 670B may start at the home page of the website associated with the received event. In operation 670C, the site classifier may crawl through the website identifying the structure between nodes. For example, the site classifier identifies links on the home page to other webpages. The site classifier then identifies links in the HTML of the lower level pages to other pages to generate a website graph or tree structure as shown in FIG. 17.

In operation 670D, the site classifier extracts other features from the webpages as described above. For example, the site classifier identifies the number of sublinks, layers of webpages, topics, impressions, amounts and types of content, number of updates, etc. associated with each webpage. In operation 670E, the site classifier classifies the website based on the website structure and other node features. For example, the site classifier may use any combination of the features discussed above to generate a classification value for the website.

As explained above, the site classifier also may weigh different node features differently. For example, the site classifier may assign a larger weight to a website graph structure indicating a publisher website and assign a lower weight to a particular type of content associated with publisher websites.

Based on all of the weighted features, the site classifier may generate the classification value predicting the type of website. In operation 670F, the site classifier may adjust the relevancy score for company topics based on the classification value. For example, site classifier may increase the relevancy score more for a larger vendor classification value and may reduce the relevancy score more for a larger publisher classification value.

Structure Based Topic Prediction

CCM 100 may use the website structure and webpage features described above to improve topics predictions for websites 644 or for individual webpages 648. For example, CCM 100 may identify a most influential page on the website 644 with the most links, the most content, the most user visits, etc. Webpages a closer distance to the most influential webpage (few number of links) may be identified as more influential than webpages a further distance from the most influential webpage. For example, a webpage 648 separated from most of the other webpages and with few sublinks may be identified as less influential in website 644 than webpages with more connections to other webpages. CCM 100 may increase the topic prediction values for more influential webpages 648 or webpages directly connected to the most influential webpages and/or reduce the topic prediction values for less influential webpages.

Site classifier 640 also may modify relevancy scores 402 based on the company associated with the website 644. For example, site classifier 640 may increase the relevancy score 402 for an identified vendor website. The site classifier 640 may increase relevancy score 402 even more for websites 644 operated by the company requesting the consumption score 410.

CCM 100 may use the structure of graph 646 to train topic models. For example, during model training, the topic model may generate topic relevancy ratings for different webpages. The model may not accurately identify the topics on a first webpage but may accurately identify the topics on other closely linked webpages. During training and testing, model performance may be rated not only on the accuracy of identifying topics on one particular webpage but also rated based on the accuracy of identifying related topics on other closely linked pages.

Topic Bundles

Instead of generating surge scores for individual topics, CCM may generate a surge score for a selected bundle of topics. CCM 100 may take the average consumption scores for the bundle of topics to generate one company consumption score. The company topic bundle may provide a more general relationship indicator for when and how to contact a company. For example, an entity may respond to a specific topic surge by making a phone call or sending emails regarding a specific product to company employees. The entity may respond to the bundle topic with less aggressive and more general topic information.

The topic bundles can also aggregate views across industries or for any customizable domain level. CCM 100 may determine the surging topics for the group of companies. A surge 412 identified for the group of companies may direct another company to increase development or production in the identified topic or topic bundle.

Data Validation

CCM 100 may use different data sources and events 108 to identify information about the same user. As mentioned above, the data sources may include Dunn and Bradstreet@, Equifax@, profile data from monitored websites or social media websites, or any other third-party source. The user information may include the user phone numbers, job titles, company names and addresses, email addresses, etc. Some of the data may be outdated or incorrect. For example, the different data sources may identify three different job titles for the same user.

The CCM 100 may generate a truth sets that ranks the reliability of the data sources. For example, if three data sources provide the same piece of information for a same user, such as job title, each data source may be ranked higher for that particular piece of information. Two of the data sources have the same piece of user information and the third data source has different piece of user information. CMM 100 may rank the third data source lower for that piece of user information.

Thus, the truth set ranks all of the data sources based on the amount of data in agreement with the other data sources. For example, the first data source may have a high ranking for job title and a low ranking for user phone number. The second data source may have a high ranking for email addresses but a low ranking for job titles. CCM 100 may use the highest ranked data sources for each of the different types user data to populate the user profiles 104B as described above in FIG. 4.

CCM 100 also may compare the derived truth set with other behavioral data generated for the same user. For example, as described above, CCM 100 may generate a user profile 104A and user intent vector 294 based on the events 108 associated with the user.

Based on the identified user intent vector and user behavioral profile, CCM 100 may identify the user as an engineer. For example, the highest relevancy topics for the user may correlate with intent vectors for other users identified as engineers. Similarly, software engineers may more likely to access data from certain types of data sources, such as Stackoverflow.com. CCM 100 may rank the data sources and generate the truth set based on the similarity of user activities and accessed data sources.

Website Interest Detector

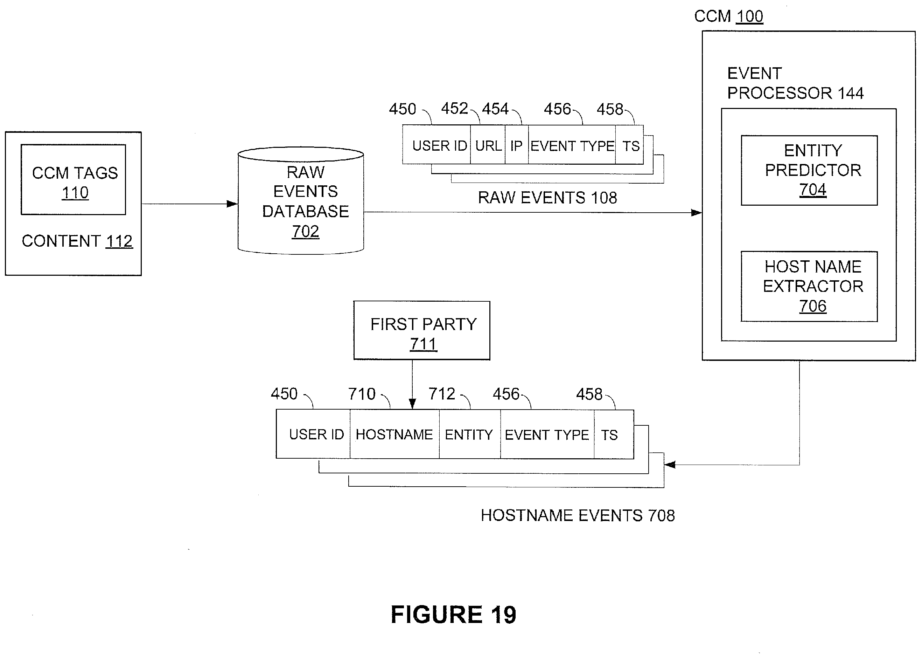

FIG. 19 shows how an event processor converts raw events into hostname events. As explained above, CCM tags 110 may capture events 108 identifying content 110 accessed by users during web or application sessions. Events 108 may include a user identifier (USER ID) 450, URL 452, IP address 454, event type 456, and time stamp (TS) 458. CCM tags 110 may capture events 108 from a group of websites and store the events in a raw events database 702. Raw events database 702 can also receive events 108 from any other collection system.

Event processor 144 in CCM 100 may operate an entity predictor 704 and a hostname extractor 706 that together operate as a consumption event transform. Entity predictor 704 may predict an entity 712 associated with IP address 454, such as a company name, organization name, etc. For example, entity predictor 704 may access an IP/company database 406 (see FIG. 8) that stores company names for associated IP addresses 454. Entity predictor 704 also may identify entity 712 for IP address 454 from user profile data 104 (see FIG. 4). For example, users during web sessions may identify their associated companies. CCM 100 may store the identified company names in user profile data 104 or in a company profile and then map the company name identified in the user profiles to IP address 454.

Host name extractor 706 extracts a hostname 710 from URL 452. For example, URL 452 in one of events 108 may include the following: http://www.acme.com/about.us. Host name extractor 706 may identify hostname 710 for URL 452 as the domain name acme.com. Event processor 144 generates an enriched set of hostname events 708 that replace URLs 452 with hostnames 710 and replaces IP addresses 454 with entity names 712.

An organization may be associated with hostname 710. For example, the Acme company may sell firewalls and operate a website associated with hostname 710. The website associated with hostname 710 may include information about firewalls sold by the Acme company. The company, entity, organization, person, etc. associated with hostname 710 and the associated website is referred to below as first party 711. The website associated with hostname 710 is referred to below as hostname website 710.

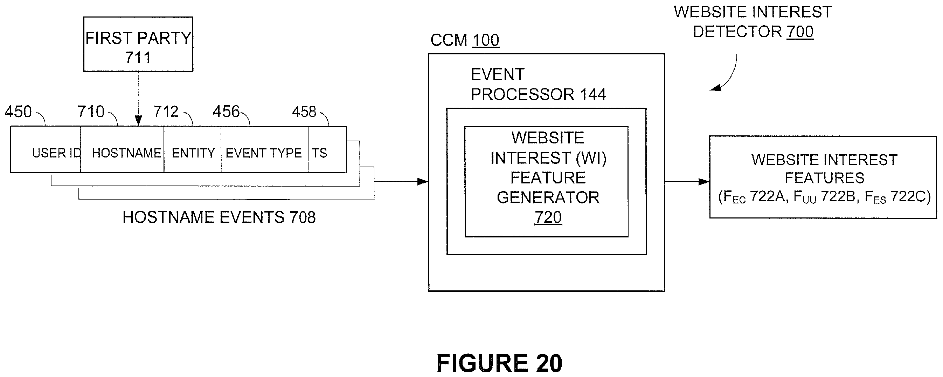

FIG. 20 shows how event processor 144 in CCM 100 generates different website interest features 722 from hostname events 708. Event processor 144 may operate a website interest (WI) feature generator 720 that generates one or more website interest features 722. Event processor 144 may generate website interest features 722 similarly to how consumption scores 410 are generated above for a particular topic and company. However, event processor 144 generates website interest features 722 based on events generated by entity 712 while accessing one or more hostname websites 710.

Feature generator 720 aggregates hostname events 708 based on entity 712 and hostname 710 to compute specific website interest features. For example, a set of hostname events 708 may include entity 712 for Company X and may include a hostname 710 for hostname website 710/Acme.com. These hostname events 708 represent interactions of entity 712/Company X (entity) with the Acme.com website.

Feature generator 720 may generate an event count feature 722A (Fec), a unique user feature 722B (Fuu), and an engagement score feature 722C (Fes) from events 708 accumulated over each day from the same hostname website 710. However, any other time period may be used for generating website interest features 722. Different website interest features 722 may be generated for different hostname websites 710. The website interest features 722 are engineered metrics that capture entity 712 interest to a hostname website 710.

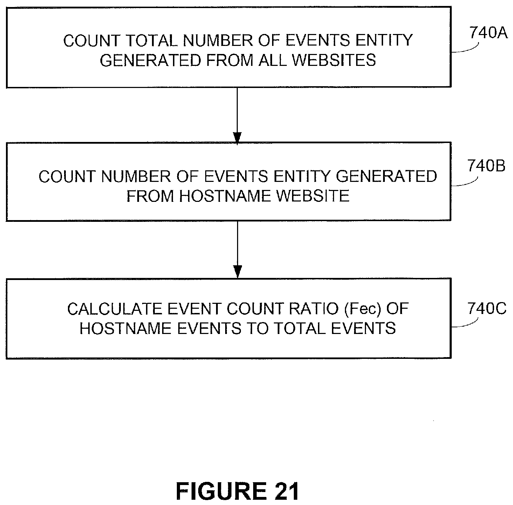

FIG. 21 shows in more detail how feature generator 720 generates event count feature, Fec. Feature generator 720 in operation 740A counts the total number of events a particular entity 712 generates from all websites over a day. For example, over one day employees of company X (entity 712) may access a variety of different websites and generate a total of 4350 events.

In operation 740B, feature generator 720 counts the number of events that entity 712 generates from hostname website 710. For example, over the same day employees of company X may access the Acme.com website a total of 340 times. In other words, there may be 340 events 708 that include the hostname/entity combination facme.com, Company X}.

In operation 740C, feature generator 720 calculates the relationship of hostname related events derived in operation 740B to the total number of events derived in operation 740A. For example, feature generator 720 may calculate an event count ratio = 340/4350 = 0.078. Feature generator 720 might consider additional normalization methods in operation 740C to control for global variance in counts of events collected by CCM tags 110.

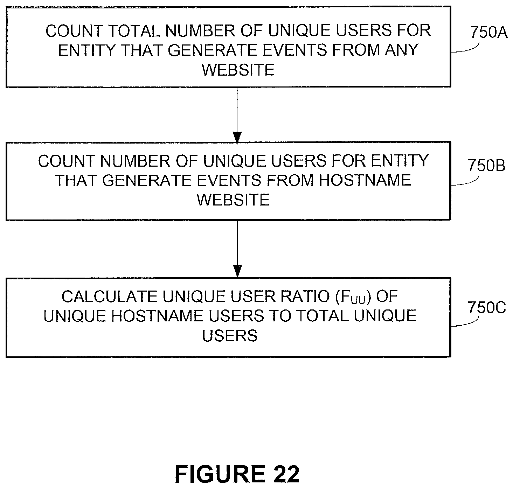

FIG. 22 shows in more detail how feature generator 720 calculates unique user feature (Fuu). In operation 750A, feature generator 720 counts the total number of unique users for entity 712 that accessed any content over the same day. For example, feature generator 720 may count the total number of unique user IDs 450 associated with company X that generated events 708 from any website. In operation 750B, feature generator 720 counts the number of unique users from entity 712 that generated events from hostname website 710. For example, feature generator 720 may count the number of unique user Ids 450 in events 708 that include hostname Acme.com and entity Company X.

In operation 750C, feature generator 720 calculates the relationship of unique users for entity 712 that accessed hostname website 710 to the total number of unique users for entity 712 that accessed content on any website. For example, feature generator 720 divides the number of unique users counted in operation 750B by the number of unique users counted in operation 750A. Feature generator 720 might consider additional normalization methods in operation 750C to control for global variance in unique users in events collected by CCM tags 110.

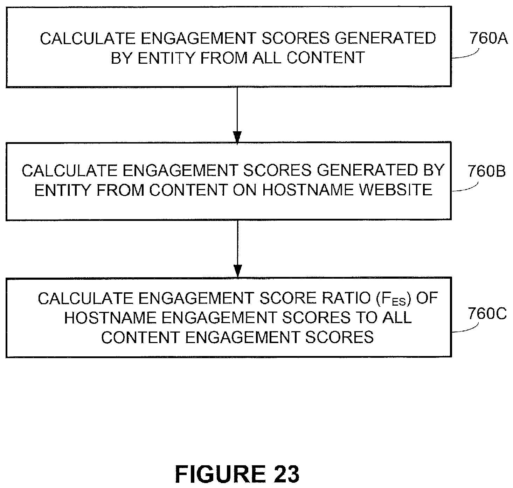

FIG. 23 shows in more detail how feature generator 720 generates engagement score feature (Fes). In operation 760A, feature generator 720 may generate engagement scores for the content accessed by entity 712 over the same day. As explained above in FIG. 15, event generator 140 may receive events that include content impressions. The impressions may identify user interaction with content including tab selections that switch to different pages, page movements, mouse page scrolls, mouse clicks, mouse movements, scroll bar page scrolls, keyboard page movements, touch screen page scrolls, or any other content movement or content manipulation indicator.

Event processor 144 may assign higher engagement scores to impressions that indicate a higher user interest and assign lower engagement scores to impressions that indicate lower user interest. For example, event processor 144 may assign a larger engagement score when the user spends more time actively dwelling on a page and may assign a smaller engagement score when the user spends less time actively dwelling on a page.

In operation 760A, feature generator 720 may add up, or average, all of the engagement scores generated from all content accessed by entity 712 over one day. In operation 760B, feature generator 720 may add up, or average, all engagement scores generated from content accessed on hostname website 710 by entity 712 over that same day. In operation 760C, feature generator 720 calculates the ratio of hostname related engagement scores to all engagement scores generated by entity 712. Feature generator 720 might consider additional normalization methods in operation 760C to control for global variance of engagement scores in events collected by CCM tags 110. Website interest features Fec, Fuu, and Fes indicate the interest of entity 712 in hostname website 710. For example, website interest features 722 may indicate the interest of Company X in the Acme.com website.

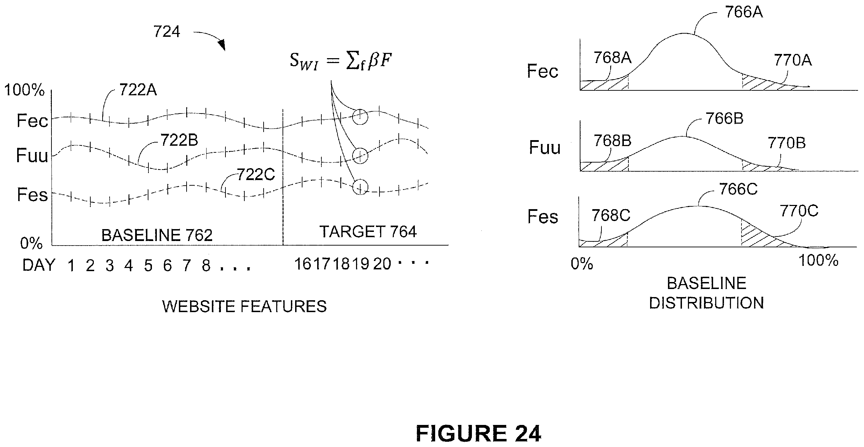

FIG. 24 shows a graph of 724 of website interest features 722A, 722B, and 722C plotted over multiple days. For example, feature generator 720 in FIG. 20 may calculate the event count feature 722A, unique user feature 722B, and engagement score feature 722C each day for a series of days.

Event processor 144 may use website interest features 722A, 722B, and 722C for a first set of days 762 as a baseline for comparing with website interest features generated over subsequent target days 764. For example, event processor 144 may calculate baseline distributions 766A, 766B, and 766C from website interest features 722A, 722B, and 722C, respectively, calculated for baseline days 762.

Event processor 144 may identify threshold regions 768 and 770 for each baseline distribution 766. For example, threshold regions 768 may be the lowest 10% of website interest features 722 in baseline distributions 766 and threshold regions 770 may be the highest 10% of website interest features 722 in baseline distributions 766. Of course any other threshold levels could be selected for baseline distributions 766.

Event processor 144 compares website interest features 722 for each day during current target period 764 with associated baseline distributions 766. Event processor 144 may generate a notification when a website interest feature 722 for any of target days 764 is located within one of threshold regions 768 or 770.

A website interest feature 722 within threshold range 768 or 770 may indicate a change in the interest of entity 710 in hostname website 710. For example, feature generator 720 may calculate an event count feature 722A (Fec) for day 17. Event count feature 722A may lie within threshold region 768A of baseline distribution 766A. This may indicate entity 710 reduced access to hostname website 710 relative to other websites and may have lost interest in hostname website 710.

In another example, feature generator 720 may calculate unique user feature 722B (Fuu) for day 19. Unique user feature 722B may lie within threshold region 770B of baseline distribution 766B. This indicates the number of unique users for entity 710 accessing hostname website 710 has increased relative to all other websites. This may indicate an increased interest of entity 710 in hostname website 710.

Event processor 140 may generate a website interest score $S_{WI}$ by calculating the sum for all three website interest features 722A, 722B, and 722C for the same days. For example, event processor 144 may multiply each website interest feature 722 by a scaling factor $\beta$ and then add the three scaled website interest feature 722A, 722B, and 722C together to create a website interest score $S_{WI} = \Sigma_f \beta F$. Website interest score $S_{WI}$ indicates an interest level of entity 712 in hostname website 710 relative to all other websites.

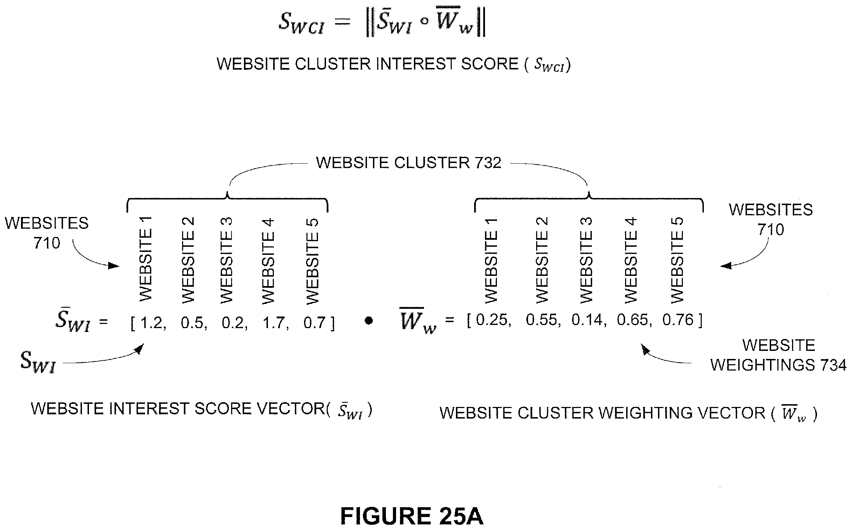

FIG. 25A shows how event processor 144 calculates a website cluster interest score $S_{WCI}$. Website cluster interest score $S_{WCI}$ indicates a level of interest of entity 712 in a cluster 732 of websites 730 selected by first party 711. For example, first party 711, such as Acme, may manage multiple hostname websites 732 that contribute to its marketing and customer outreach efforts, such as www.acme.com, www.acme.co.uk, or iot.acme.com. A different website cluster 732 may be associated with various websites to reach their potential customers.

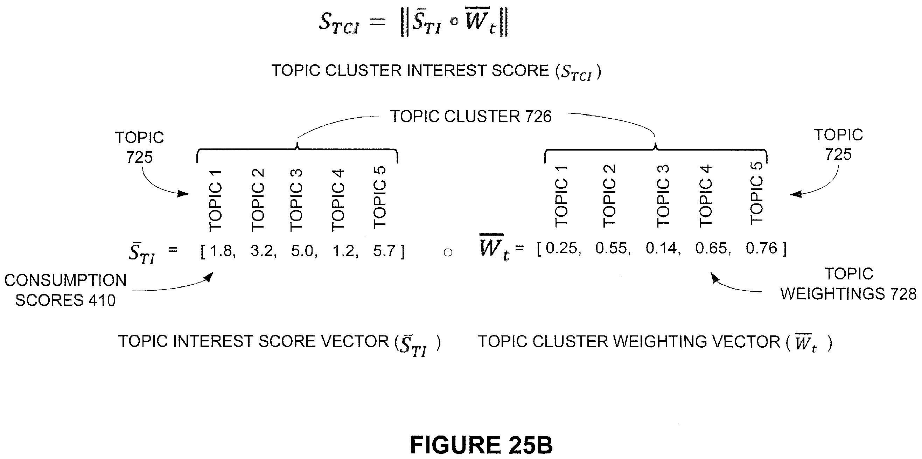

First party 711 may provide a website cluster weighting vector $\overline{W}_w$ = [ww1, ww2, ...., wwn]. Website cluster weighting vector $\overline{W}_w$ may be a sets of weights 734 for applying to website interest scores $S_{WI}$ associated with the same hostname websites 710. For example, Acme may own and manage multiple websites 710, such as www.acme.com, www.acme.co.uk, or iot.acme.com. Acme may provide a website cluster weighting vector $\overline{W}_w$ that might assign larger weights 734 to global hostname websites, such as www.acme.com, in comparison to other hostname websites. Website cluster weighting vector $W_w$ may be assembled manually or event processor 140 may derive weightings 734 by crawling content on hostname websites 710. For example, event processor 144 may assign larger website weightings 734 to hostname websites 710 containing more content similar to a defined topic cluster 726 (see FIG. 25).

Event processor 144 calculates website cluster interest score $S_{WCI} = \|\overline{S}_{WI} \circ \overline{W}_w\|$ by computing the magnitude of the vector that is the result of the entrywise product of website interest score vector $\overline{S}_{WI}$ and website cluster weighting vector $\overline{W}_w$. Website cluster interest score $S_{WCI}$ represents an average interest level of entity 712 in website cluster 732. $S_{WCI}$ is based on content accessed by entity 712 from hostname websites 710.

FIG. 25B shows how event processor 140 calculates a topic cluster interest score $S_{TCI}$. Topic cluster interest score $S_{TCI}$ indicates a level of interest of entity 712 in a cluster of topics selected by first party 711. For example, first party 711, such as Acme, may sell firewalls and may subscribe to one or more topic clusters 726. A different topic cluster 726 may be associated with each of the subjects of interest to Acme, such as virtualization, servers, security, etc.

Event processor 140 may generate consumption scores 410 for entity 712 for each of the topics 725 in the subscribed topic cluster 726 as described above in FIG. 9. The cluster of topic consumption scores 410 is referred to as a topic interest score vector $\overline{S}_{TI}$. Consumption scores 410 are generated from all content accessed by entity 712 including content accessed on hostname websites 710 and content accessed on other third party websites.

First party 711 may provide a topic cluster weighting vector $\overline{W}_t$ = [wt1, wt2, ..., wtn]. Topic cluster weighting vector $\overline{W}_t$ may be a set of weights 728 for applying to associated topic consumption scores 410. For example, Acme may sell firewalls. Acme may provide a topic cluster weighting vector $\overline{W}_t$ that assigns larger weights 728 to firewall related topics 725 compared to other topics 725. Topic cluster weighting vector $\overline{W}_t$ may be assembled manually or event processor 144 may derive weightings 728 by crawling content on hostname websites 710. For example, event processor 144 may assign larger topic weightings 728 to topics 725 more frequently identified on hostname websites 710.

Event processor 144 calculates topic cluster interest score $S_{TCI} = \|\overline{S}_{TI} \circ \overline{W}_t\|$ by computing the magnitude of the vector that is the result of the entrywise product of topic interest score vector $\overline{S}_{TI}$ and topic cluster weighting vector $\overline{W}_t$. Topic cluster interest score $S_{TCI}$ represents an average interest level of entity 712 in topic cluster 726. $S_{TCI}$ is based on all content accessed by entity 712, including content from hostname website 710 and any other third party websites.

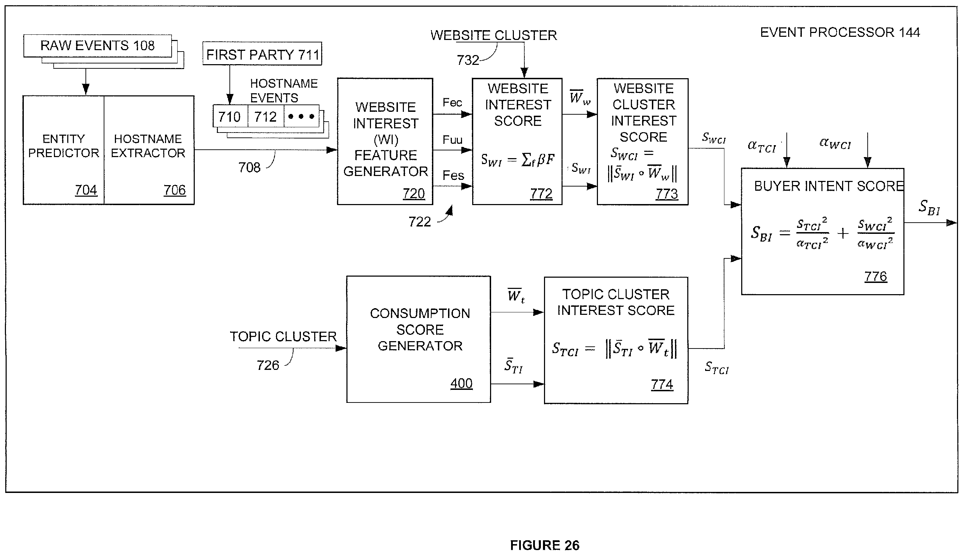

FIG. 26 shows how event processor 144 combines website cluster interest score $S_{WCI}$ with topic cluster interest score $S_{TCI}$ to generate a first party weighted intent score, alternatively referred to as a buyer intent score $S_{BI}$. As explained above, first party 711 refers to the company associated with hostname websites 710 in website cluster 732. For example, the company Acme may be a first party 711 that operates the hostname websites Acme.com, Acme.co.uk, and IoT.Acme.com. Buyer intent score $S_{BI}$ may help determine if entity 712 is interested in the products or services sold by first party Acme.

As also explained above, event processor 144 operates an entity predictor 704 and a hostname extractor 706 that convert raw events 108 into hostname events 708. Hostname events 708 identify a hostname 710 for the URL in raw event 108 and an entity 712 for the IP address in raw event 108. Website interest feature generator 720 generates website interest features 722 from hostname events 708 that indicate an interest level of entity 712 in hostname websites 710. Event processor 144 also operates a module 772 that calculates website interest scores $S_{WI}$ by adding together website interest features 722 (Fee, Fuu, and Fes) for the same time periods for the same hostname websites 710.

First party 711 may define a website cluster 732 associated with a group of websites 710 owned / managed by first party 711. First party 711 may provide website cluster weighting vector $\overline{W}_w$ or event processor 144 may automatically generate $\overline{W}_w$ by crawling hostname websites 710, and finding content similarity to predefined topic cluster 726. Event processor 144 in module 773 calculates website cluster interest score $S_{WCI}$ by computing the magnitude of the vector that is the result of the entrywise product of website interest score vector $\overline{S}_{WI}$ and website cluster weighting vector $\overline{W}_w$. In one example, website cluster interest score $S_{WCI} = \|\overline{S}_{WI} \circ \overline{W}_w\|$.

As also explained above, first party 711 associated with hostname websites 710 may subscribe to a topic cluster 726 associated with a particular subject, such as firewalls. Consumption score generator 400 generates a set of consumption scores for the topic cluster 726 referred to as topic interest score vector $\overline{S}_{TI}$. First party 711 also may provide topic cluster weighting vector $\overline{W}_t$ or event processor 144 may automatically generate $\overline{W}_t$ by crawling hostname websites 710. Event processor 144 in module 774 calculates topic cluster interest score $S_{TCI}$ by computing the magnitude of the vector that is the result of the entrywise product of topic interest score vector $\overline{S}_{TI}$ and topic cluster weighting vector $W_t$. In one example, topic cluster interest score $S_{TCI} = \|\overline{S}_{TI} \circ \overline{W}_t\|$

Event processor 144 in module 776 combines website cluster interest score $S_{WCI}$ with topic cluster interest score $S_{TCI}$ to generate buyer intent score $S_{BI}$. In one example, buyer intent score $S_{BI} = \dfrac{S_{TCI}^2}{\alpha_{TCI}^2} + \dfrac{S_{WCI}^2}{\alpha_{WCI}^2}$ , where:

$S_{TCI}$ is the topic cluster interest score,

$S_{WCI}$ is the website cluster interest score,

$\alpha_{TCI}$ is a topic cluster interest threshold, and

$\alpha_{WCI}$ is a website cluster interest threshold.

During a surge in buyer intent score $S_{BI}$, one or both of scores $S_{WCI}$ and $S_{TCI}$ may exceed associated thresholds $\alpha_{WCI}$ and $\alpha_{TCI}$, respectively. For example, event processor 144 may identify a surge for entity 712 when topic cluster interest score $S_{TCI}$ exceeds topic cluster interest threshold $\alpha_{TCI}$ or website cluster interest score $S_{WCI}$ exceeds website cluster interest threshold $\alpha_{WCI}$. Thresholds $\alpha_{TCI}$ and $\alpha_{WCI}$ may be derived based on baseline distributions as described above in FIG. 24A or may be based on any other a priori data.

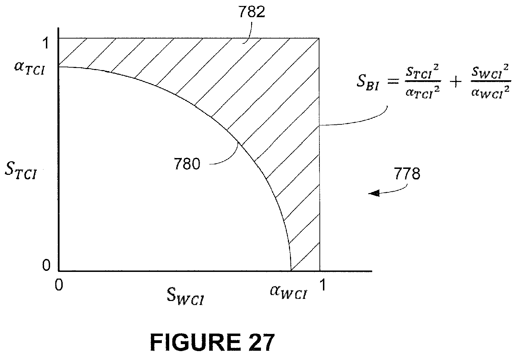

FIG. 27 shows a graph 778 for buyer intent score $S_{BI}$. The Y axis represents topic cluster interest score $S_{TCI}$ and the X axis represents website cluster interest score $S_{WCI}$. Graph 778 shows how buyer intent score $S_{BI}$ ties the interest of entity 712 in a topic cluster 726 (FIG. 25B) with the interest of entity 712 in hostname website cluster 732 (FIG. 25A).

Any value of $S_{BI}$ exceeding a threshold 780 may indicate a surge by entity 712. For example, a value of buyer intent score $S_{BI}$ within region 782 may indicate a surge in the interest of entity 712 in topic cluster 726 and/or hostname website cluster 732. In one example, a buyer intent score $S_{BI}$ greater than a threshold value of 1 may indicate a surge by entity 712. Of course threshold 780 depends on the weightings and normalizations applied to buyer intent score parameters.

CCM 100 may send a notification to the first party 711 associated with hostname websites 710 identifying the surge by entity 712. First party 711, such as Acme, may send information or call employees of entity 712, such as Company X. For example, Acme may call or send email advertisements, literature, direct mailings, or banner ads for related products to employees of Company X.

Buyer intent score $S_{BI}$, topic cluster interest score $S_{TCI}$, and/or website cluster interest score $S_{WCI}$ also may measure account-based advertising performance. For example, event processor 144 may compare buyer intent score $S_{BI}$ with advertising content sent to specific companies or employees of companies. Event processor 144 may measure the increase of visits to hostname website 710, such as Acme.com, tying the targeted companies to the companies visiting Acme.com. Increases in buyer intent score $S_{BI}$ for companies that have received advertising suggests a particular ad campaign may be outperforming another and therefore should have increased investment.

Hardware and Software

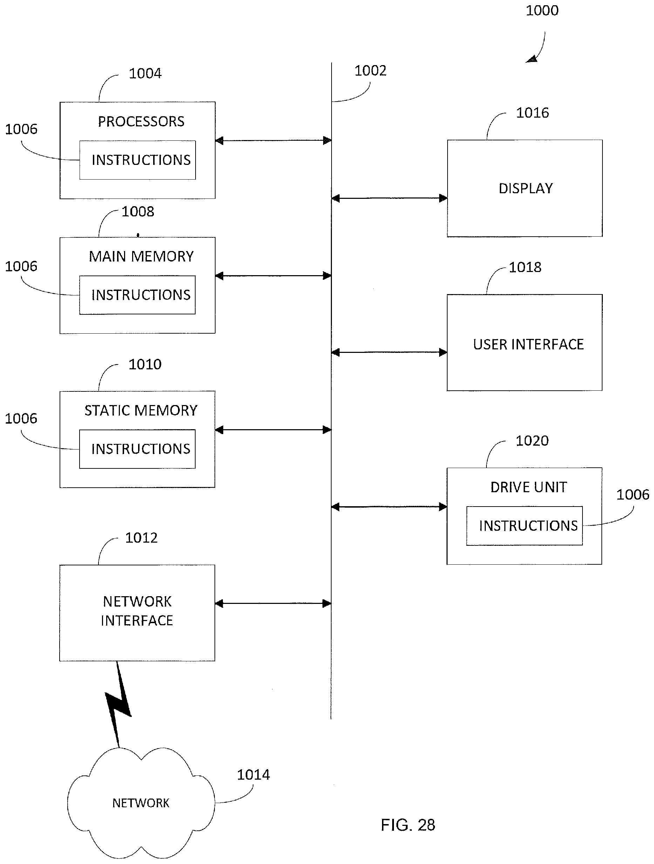

FIG. 28 shows a computing device 1000 that may be used for operating the content consumption monitor and performing any combination of processes discussed above. The computing device 1000 may operate in the capacity of a server or a client machine in a server-client network environment, or as a peer machine in a peer-to-peer (or distributed) network environment. In other examples, computing device 1000 may be a personal computer (PC), a tablet, a Personal Digital Assistant (PDA), a cellular telephone, a smart phone, a web appliance, or any other machine or device capable of executing instructions 1006 (sequential or otherwise) that specify actions to be taken by that machine.

While only a single computing device 1000 is shown, the computing device 1000 may include any collection of devices or circuitry that individually or jointly execute a set (or multiple sets) of instructions to perform any one or more of the operations discussed above. Computing device 1000 may be part of an integrated control system or system manager, or may be provided as a portable electronic device configured to interface with a networked system either locally or remotely via wireless transmission.

Processors 1004 may comprise a central processing unit (CPU), a graphics processing unit (GPU), programmable logic devices, dedicated processor systems, micro controllers, or microprocessors that may perform some or all of the operations described above. Processors 1004 may also include, but may not be limited to, an analog processor, a digital processor, a microprocessor, multi-core processor, processor array, network processor, etc.

Some of the operations described above may be implemented in software and other operations may be implemented in hardware. One or more of the operations, processes, or methods described herein may be performed by an apparatus, device, or system similar to those as described herein and with reference to the illustrated figures.

Processors 1004 may execute instructions or "code" 1006 stored in any one of memories 1008, 1010, or 1020. The memories may store data as well. Instructions 1006 and data can also be transmitted or received over a network 1014 via a network interface device 1012 utilizing any one of a number of well-known transfer protocols.

Memories 1008, 1010, and 1020 may be integrated together with processing device 1000, for example RAM or FLASH memory disposed within an integrated circuit microprocessor or the like. In other examples, the memory may comprise an independent device, such as an external disk drive, storage array, or any other storage devices used in database systems. The memory and processing devices may be operatively coupled together, or in communication with each other, for example by an I/O port, network connection, etc. such that the processing device may read a file stored on the memory.

Some memory may be "read only" by design (ROM) by virtue of permission settings, or not. Other examples of memory may include, but may be not limited to, WORM, EPROM, EEPROM, FLASH, etc. which may be implemented in solid state semiconductor devices. Other memories may comprise moving parts, such a conventional rotating disk drive. All such memories may be "machine-readable" in that they may be readable by a processing device.

"Computer-readable storage medium" (or alternatively, "machine-readable storage medium") may include all of the foregoing types of memory, as well as new technologies that may arise in the future, as long as they may be capable of storing digital information in the nature of a computer program or other data, at least temporarily, in such a manner that the stored information may be "read" by an appropriate processing device. The term "computer-readable" may not be limited to the historical usage of "computer" to imply a complete mainframe, mini-computer, desktop, wireless device, or even a laptop computer. Rather, "computer-readable" may comprise storage medium that may be readable by a processor, processing device, or any computing system. Such media may be any available media that may be locally and/or remotely accessible by a computer or processor, and may include volatile and non-volatile media, and removable and non-removable media.

Computing device 1000 can further include a video display 1016, such as a liquid crystal display (LCD) or a cathode ray tube (CRT) and a user interface 1018, such as a keyboard, mouse, touch screen, etc. All of the components of computing device 1000 may be connected together via a bus 1002 and/or network.

For the sake of convenience, operations may be described as various interconnected or coupled functional blocks or diagrams. However, there may be cases where these functional blocks or diagrams may be equivalently aggregated into a single logic device, program or operation with unclear boundaries.

Having described and illustrated the principles of a preferred embodiment, it should be apparent that the embodiments may be modified in arrangement and detail without departing from such principles. Claim is made to all modifications and variation coming within the scope of the following claims.

**Claims**

1. A non-transitory computer-readable storage medium, comprising a set of instructions for operating an event processor, wherein execution of the set of instructions by a hardware processor is to cause the hardware processor to:

   obtain a set of raw events generated by websites accessed by client applications, wherein each raw event of the set of raw events includes a user identifier of a user that accessed a website that generated the raw event, a universal resource locator (URL) of the accessed website, an internet protocol (IP) address of a network device used to access the website, and a set of impressions indicating actions taken by the user that accessed the accessed website;
   predict for each raw event, an entity associated with the IP address;
   extract from each raw event, a hostname from the URL;
   generate a set of hostname events from the set of raw events by replacing the URL in each raw event with the extracted hostname for that raw event and replacing the IP address in each raw event with a name of the predicted entity for that raw event;
   generate a set of website interest features from the set of hostname events, wherein the set of website interest features are engineered metrics that capture entity interest to a hostname website, and wherein the hostname website is a website associated with the entity; and
   generate a website interest score indicating an interest level of the entity in the hostname website relative to all other websites based on the set of website interest features.

2. The non-transitory computer-readable storage medium of claim 1, wherein execution of the set of instructions is to further cause the hardware processor to:
generate event count features (Fec), unique user features (Fuu), and engagement score features (Fes) from the set of hostname events having a same hostname website that are accumulated over a time period.

3. The non-transitory computer-readable storage medium of claim 2, wherein execution of the set of instructions is to further cause the hardware processor to:
generate the Fec based on a ratio of a number of the hostname events generated by the predicted entity from the hostname website over the time period to a total number of raw events generated by the predicted entity over the time period.

4. The non-transitory computer-readable storage medium of claim 2 or 3, wherein execution of the set of instructions is to further cause the hardware processor to:
generate the Fuu based on a ratio of a number of unique users belonging to the predicted entity generating raw events from the hostname website over the time period to a total number of unique users belonging to the predicted entity generating raw events over the time period.

5. The non-transitory computer-readable storage medium of any of claims 2 to 4, wherein each raw event further includes an event type indicating an action or activity associated with the accessed website, and execution of the set of instructions is to further cause the hardware processor to:
generate the Fes based on a ratio of engagement scores for interactions with the hostname website over the time period by users belonging to the predicted entity to engagement scores for interactions with the all accessed websites over the time period by users belonging to the entity, wherein the engagement scores for the interactions with the hostname website and the engagement scores for the interaction with the all accessed websites are based in the set of impressions included in the set of raw events.

6. The non-transitory computer-readable storage medium of any of claims 1 to 5, wherein execution of the set of instructions is to further cause the hardware processor to:

generate a first series of website interest scores from the hostname events generated over a series of baseline time periods;
generate a baseline distribution from the first series of website interest scores;
compare a second series of website interest scores generated over a subsequent series of current time periods with the baseline distribution; and
identify an entity surge when any of the second series of website interest scores are outside of a threshold range of the baseline distribution.

7. The non-transitory computer-readable storage medium of any of claims 1 to 6, wherein execution of the set of instructions is to further cause the hardware processor to:

receive a website cluster identifying multiple hostname websites;
generate website interest scores for each of the hostname websites in the website cluster; and
generate a website cluster interest score based on the website interest scores for the website cluster.

8. The non-transitory computer-readable storage medium of claim 7, wherein execution of the set of instructions is to further cause the hardware processor to:

receive a website cluster weighting vector including weighting values for each of the hostname websites; and
apply the website cluster weighting vector to the website interest scores associated with the same hostname websites to generate the website cluster interest score.

9. The non-transitory computer-readable storage medium of claim 7 or 8, wherein execution of the set of instructions is to further cause the hardware processor to:

receive a topic cluster including multiple topics;
generate consumption scores for each of the topics;
generate a topic cluster interest score based on the consumption scores for each of the topics; and
combine the topic cluster interest score with the website cluster interest score to generate a weighted intent score.

10. The non-transitory computer-readable storage medium of claim 9, wherein execution of the set of instructions is to further cause the hardware processor to:
generate the consumption scores based on events generated by the entity from the hostname website and events generated by the entity from other third party websites.

11. The non-transitory computer-readable storage medium of claim 9 or 10, wherein execution of the set of instructions is to further cause the hardware processor to:

receive a topic cluster weighting vector including weighting values for each of the topics; and
apply the topic cluster weighting vector to the consumption scores associated with the same topics to generate the topic cluster interest score.

12. The non-transitory computer-readable storage medium of any of claims 9 to 11, wherein the weighted intent score comprises:

$$S_{BI} = \frac{S_{TCI}{}^2}{\alpha_{TCI}{}^2} + \frac{S_{WCI}{}^2}{\alpha_{WCI}{}^2},$$

where:

$S_{TCI}$ is the topic cluster interest score,
$S_{WCI}$ is the website cluster interest score,
$\alpha_{TCI}$ is a topic cluster interest threshold, and
$\alpha_{WCI}$ is a website cluster interest threshold.

13. An apparatus, comprising:

a processing device;
a memory device coupled to the processing device, the memory device having instructions stored thereon that, in response to execution by the processing device, are operable to:

identify from each raw event of a plurality of raw events generated by a plurality of websites accessed by a plurality of client applications, a user identifier of a user that accessed a website that generated the raw event, a universal resource locator (URL) of the accessed website, an internet protocol (IP) address of a network device used to access the website, and a set of impressions indicating actions taken by the user that accessed the accessed website; and
predict, for each raw event, an entity associated with the IP address;
extract, from each raw event, a hostname from the URL;
generate a set of hostname events from the set of raw events by replacing the URL in each raw event with the extracted hostname for that raw event and replacing the IP address in each raw event with a name of the predicted entity for that raw event;
generate a set of website interest features from the set of hostname events, wherein the set of website interest features are engineered metrics that capture entity interest to a hostname website, and wherein the hostname website is a website associated with the entity; and
generate a website interest score indicating an interest level of the predicted entity in the hostname website relative to all other websites based on the set of website interest features.

14. The apparatus of claim 13, wherein the instructions in response to execution by the processing device, are further operable to:
generate event count features (Fec), unique user features (Fuu), and engagement score features (Fes) from the set of hostname events having a same hostname website that are accumulated over a time period.

15. The apparatus of claim 14, wherein the instructions in response to execution by the processing device, are further operable to:
generate the Fec based on a ratio of a number of the hostname events generated by the predicted entity from the hostname website over the time period to a total number of raw events generated by the predicted entity over the time period.

16. The apparatus of claim 15, wherein the instructions in response to execution by the processing device, are further operable to:
generate the Fuu based on a ratio of a number of unique users belonging to the predicted entity generating raw events from the hostname website over the time period to a total number of unique users belonging to the predicted entity generating raw events over the time period.

17. The apparatus of claim 15 or 16, wherein the instructions in response to execution by the processing device, are further operable to:
generate the Fes based on a ratio of engagement scores for interactions with the hostname website over the time period by users belonging to the predicted entity to engagement scores for interactions with the all accessed websites over the time period by users belonging to the entity, wherein the engagement scores for the interactions with the hostname website and the engagement scores for the interactions with all the accessed websites are based on the set of impressions included in the set of raw events.

18. The apparatus of any of claims 13 to 17, wherein the instructions in response to execution by the processing device, are further operable to:

generate a first series of website cluster interest scores from the hostname events generated over a series of baseline time periods;
generate a baseline distribution from the first series of website cluster interest scores;
compare a second series of website cluster interest scores generated over a subsequent series of current time periods with the baseline distribution; and
identify an entity surge when any of the second series of website interest scores are outside of a threshold range of the baseline distribution.

19. The apparatus of any of claims 13 to 18, wherein the instructions in response to execution by the processing device, are further operable to:

receive a topic cluster including multiple topics;
generate consumption scores for the predicted entity for each of the topics;
generate the topic cluster interest score based on the consumption scores for each of the topics;
combine the topic cluster interest score with the website cluster interest score to generate a weighted intent score.

20. The apparatus of claim 19, wherein the instructions in response to 20 execution by the processing device, are further operable to:

identify content associated with the events accessed by the entity;
identify a relevancy of the content to the topics;
identify a number of the events generated by the entity; and
generate the consumption scores for the entity based on the number of the events and the relevancy of the content to the topics.

21. The apparatus of claim 19 or 20, wherein the instructions in response to execution by the processing device, are further operable to:

receive a topic cluster weighting vector including weighting values for each of the topics; and
apply the topic cluster weighting vector to the consumption scores associated with the same topics to generate the topic cluster interest score.

22. The apparatus of any of claims 13 to 21, wherein the weighted intent score comprises:

$$S_{BI} = \frac{S_{TCI}^2}{\alpha_{TCI}^2} + \frac{S_{WCI}^2}{\alpha_{WCI}^2} \, ,$$

where:

$S_{TCI}$ is the topic cluster interest score,
$S_{WCI}$ is the website cluster interest score,
$\alpha_{TCI}$ is a topic cluster interest threshold, and
$\alpha_{WCI}$ is a website cluster interest threshold.

23. The apparatus of any of claims 13 to 22, wherein the instructions in response to execution by the processing device, are further operable to:

identify the events that include the same hostname and entity; and
generate the website cluster interest score based on the events generated by the same entity from the same hostname website compared with the events generated by the same entity from the hostname website and the other third party websites.

**Patentansprüche**

1. Nicht-transitorisches computerlesbares Speichermedium, das einen Befehlssatz zum Betreiben eines Ereignisprozessors umfasst, wobei die Ausführung des Befehlssatzes durch einen Hardwareprozessor bewirken soll, dass der Hardwareprozessor:

einen Satz Rohereignisse erhält, die von Websites erzeugt werden, auf die von Client-Anwendungen zugegriffen wird, wobei jedes Rohereignis des Satzes an Rohereignissen eine Benutzerkennung eines Benutzers, der auf eine Website zugegriffen hat, die das Rohereignis erzeugt hat, einen universellen Ressourcen-Lokalisierer (URL) der Website, auf die zugegriffen wurde, eine Internetprotokoll-Adresse (IP-Adresse) einer Netzwerkvorrichtung, die für den Zugriff auf die Website verwendet wird, und einen Satz Eindrücke aufweist, die Handlungen angeben, die vom Benutzer vorgenommen werden, der auf die Website, auf die zugegriffen wurde, zugegriffen hat,
für jedes Rohereignis eine der IP-Adresse zugeordnete Entität vorhersagt,
aus jedem Rohereignis einen Hostnamen aus der URL extrahiert,
aus dem Satz Rohereignisse einen Satz Hostnamen-Ereignisse erzeugt, indem er die URL in jedem Rohereignis durch den extrahierten Hostnamen für dieses Rohereignis ersetzt und die IP-Adresse in jedem Rohereignis durch einen Namen der vorhergesagten Entität für dieses Rohereignis ersetzt,
aus dem Satz Hostnamen-Ereignisse einen Satz Website-Interessensmerkmale erzeugt, wobei der Satz Website-Interessensmerkmale konstruierte Metriken sind, die das Interesse einer Entität an einer Hostnamen-Website erfassen, und wobei die Hostnamen-Website eine der Entität zugeordnete Website ist, und
einen Website-Interessenspunktwert erzeugt, der einen Grad des Interesses der Entität an der Hostnamen-Website im Verhältnis zu allen anderen Websites auf der Grundlage des Satzes an Website-Interessensmerkmalen angibt.

2. Nicht-transitorisches computerlesbares Speichermedium nach Anspruch 1, wobei die Ausführung des Befehlssatzes ferner bewirken soll, dass der Hardwareprozessor:
Ereigniszählungsmerkmale (Fec), eindeutige Benutzermerkmale (Fuu) und Engagement-Punktwertmerkmale (Fes) aus dem Satz an Hostnamen-Ereignissen erzeugt, die eine gleiche Hostnamen-Website haben, die über einen Zeitraum akkumuliert werden.

3. Nicht-transitorisches computerlesbares Speichermedium nach Anspruch 2, wobei die Ausführung des Befehlssatzes ferner bewirken soll, dass der Hardwareprozessor:
die Fec auf der Grundlage eines Verhältnisses einer Anzahl der Hostnamen-Ereignisse, die von der vorhergesagten Entität aus der Hostnamen-Website über den Zeitraum erzeugt werden, zu einer Gesamtanzahl an Rohereignissen erzeugt, die von der vorhergesagten Entität über den Zeitraum erzeugt werden.

4. Nicht-transitorisches computerlesbares Speichermedium nach Anspruch 2 oder 3, wobei die Ausführung des Befehlssatzes ferner bewirken soll, dass der Hardwareprozessor:
die Fuu auf der Grundlage eines Verhältnisses einer Anzahl an eindeutigen Benutzern, die zu der vorhergesagten Entität gehören, die Rohereignisse aus der Hostnamen-Website über den Zeitraum erzeugt, zu einer Gesamtanzahl an eindeutigen Benutzern erzeugt, die zu der vorhergesagten Entität gehören, die Rohereignisse über den Zeitraum erzeugt.

**5.** Nicht-transitorisches computerlesbares Speichermedium nach einem der Ansprüche 2 bis 4, wobei jedes Rohereignis ferner einen Ereignistyp aufweist, der eine Handlung bzw. Aktivität angibt, die der Website, auf die zugegriffen wird, zugeordnet ist, und die Ausführung des Befehlssatzes ferner bewirken soll, dass der Hardwareprozessor: die Fes auf der Grundlage eines Verhältnisses von Engagement-Punktwerten für Interaktionen mit der Hostnamen-Website über den Zeitraum durch Benutzer, die zu der vorhergesagten Entität gehören, zu Engagement-Punktwerten für Interaktionen mit den bzw. allen Websites, auf die zugegriffen wurde, über den Zeitraum durch Benutzer, die zu der Entität gehören, erzeugt, wobei die Engagement-Punktwerte für die Interaktionen mit der Hostnamen-Website und die Engagement-Punktwerte für die Interaktion mit den bzw. allen Websites, auf die zugegriffen wurde, in dem Satz Eindrücke basiert sind, der in dem Satz Rohereignisse enthalten ist.

**6.** Nicht-transitorisches computerlesbares Speichermedium nach einem der Ansprüche 1 bis 5, wobei die Ausführung des Befehlssatzes ferner bewirken soll, dass der Hardwareprozessor:

eine erste Reihe von Website-Interessenpunktwerten aus den Hostnamen-Ereignissen erzeugt, die über eine Reihe von Grundlinienzeiträumen erzeugt wurden, eine Grundlinienverteilung aus der ersten Reihe von Website-Interessenpunktwerten erzeugt, eine zweite Reihe von Website-Interessenpunktwerten, die über eine nachfolgende Reihe aktueller Zeiträume erzeugt werden, mit der Grundlinienverteilung vergleicht und einen starken Entitätsanstieg erkennt, wenn ein beliebiger aus der zweiten Reihe von Website-Interessenpunktwerten außerhalb eines Schwellenbereichs der Grundlinienverteilung liegt.

**7.** Nicht-transitorisches computerlesbares Speichermedium nach einem der Ansprüche 1 bis 6, wobei die Ausführung des Befehlssatzes ferner bewirken soll, dass der Hardwareprozessor:

einen Website-Cluster empfängt, der mehrere Hostnamen-Websites bezeichnet, Website-Interessenpunktwerte für jede der Hostnamen-Websites in dem Website-Cluster erzeugt und einen Website-Cluster-Interessenpunktwert auf der Grundlage der Website-Interessenpunktwerte für den Website-Cluster erzeugt.

**8.** Nicht-transitorisches computerlesbares Speichermedium nach Anspruch 7, wobei die Ausführung des Befehlssatzes ferner bewirken soll, dass der Hardwareprozessor:

einen Website-Cluster-Gewichtungsvektor empfängt, der Gewichtungswerte für jede der Hostnamen-Websites enthält, und den Website-Cluster-Gewichtungsvektor auf die Website-Interessenpunktwerte anwendet, die den gleichen Hostnamen-Websites zugeordnet sind, um den Website-Cluster-Interessenpunktwert zu erzeugen.

**9.** Nicht-transitorisches computerlesbares Speichermedium nach Anspruch 7 oder 8, wobei die Ausführung des Befehlssatzes ferner bewirken soll, dass der Hardwareprozessor:

einen Themen-Cluster empfängt, der mehrere Themen enthält, Verbrauchspunktwerte für jedes der Themen erzeugt, einen Themen-Cluster-Interessenpunktwert auf der Grundlage der Verbrauchspunktwerte für jedes der Themen erzeugt und den Themen-Cluster-Interessenpunktwert mit dem Website-Cluster-Interessenpunktwert kombiniert, um einen gewichteten Absichtspunktwert zu erzeugen.

**10.** Nicht-transitorisches computerlesbares Speichermedium nach Anspruch 9, wobei die Ausführung des Befehlssatzes ferner bewirken soll, dass der Hardwareprozessor: die Verbrauchspunktwerte auf der Grundlage von Ereignissen, die von der Entität aus der Hostnamen-Website erzeugt werden, und Ereignissen erzeugt, die von der Entität aus anderen Dritt-Websites erzeugt werden.

**11.** Nicht-transitorisches computerlesbares Speichermedium nach Anspruch 9 oder 10, wobei die Ausführung des Befehlssatzes ferner bewirken soll, dass der Hardwareprozessor:

einen Themen-Cluster-Gewichtungsvektor empfängt, der Gewichtungswerte für jedes der Themen enthält, und den Themen-Cluster-Gewichtungsvektor auf die Verbrauchspunktwerte anwendet, die den gleichen Themen zugeordnet sind, um den Themen-Cluster-Interessenpunktwert zu erzeugen.

**12.** Nicht-transitorisches computerlesbares Speichermedium nach einem der Ansprüche 9 bis 11, wobei der gewichtete Absichtspunktwert Folgendes umfasst:

$$S_{BI} = \frac{S_{TCI}{}^2}{\alpha_{TCI}{}^2} + \frac{S_{WCI}{}^2}{\alpha_{WCI}{}^2},$$

worin:

$S_{TCI}$ der Themen-Cluster-Interessenpunktwert ist,
$S_{WCI}$ der Website-Cluster-Interessenpunktwert ist,
$\alpha_{TCI}$ ein Themen-Cluster-Interessenschwellenwert ist und
$\alpha_{WCI}$ ein Website-Cluster-Interessenschwellenwert ist.

**13.** Gerät, das Folgendes umfasst:

eine Verarbeitungsvorrichtung,
eine Speichervorrichtung, die mit der Verarbeitungsvorrichtung verbunden ist, wobei auf der Speichervorrichtung Befehle gespeichert sind, die als Reaktion auf die Ausführung durch die Verarbeitungsvorrichtung so durchgeführt werden können, dass sie:

aus jedem Rohereignis von mehreren Rohereignissen, die von mehreren Websites erzeugt werden, auf die von mehreren Client-Anwendungen zugegriffen wird, eine Benutzerkennung eines Benutzers, der auf eine Website zugegriffen hat, die das Rohereignis erzeugt hat, einen universellen Ressourcen-Lokalisierer (URL) der Website, auf die zugegriffen wurde, eine Internetprotokoll-Adresse (IP-Adresse) einer Netzwerkvorrichtung, die für den Zugriff auf die Website verwendet wird, und einen Satz Eindrücke erkennen, die Handlungen angeben, die vom Benutzer vorgenommen werden, der auf die Website, auf die zugegriffen wurde, zugegriffen hat; und
für jedes Rohereignis eine der IP-Adresse zugeordnete Entität vorhersagen,
aus jedem Rohereignis einen Hostnamen aus der URL extrahieren,
aus dem Satz Rohereignisse einen Satz Hostnamen-Ereignisse erzeugen, indem sie die URL in jedem Rohereignis durch den extrahierten Hostnamen für dieses Rohereignis ersetzen und die IP-Adresse in jedem Rohereignis durch einen Namen der vorhergesagten Entität für dieses Rohereignis ersetzen,
aus dem Satz Hostnamen-Ereignisse einen Satz Website-Interessensmerkmale erzeugen, wobei der Satz Website-Interessensmerkmale konstruierte Metriken sind, die das Interesse einer Entität an einer Hostnamen-Website erfassen, und wobei die Hostnamen-Website eine der Entität zugeordnete Website ist, und einen Website-Interessenspunktwert erzeugen, der einen Grad des Interesses der vorhergesagten Entität an der Hostnamen-Website im Verhältnis zu allen anderen Websites auf der Grundlage des Satzes an Website-Interessensmerkmalen angibt.

**14.** Gerät nach Anspruch 13, wobei die Befehle als Reaktion auf die Ausführung durch die Verarbeitungsvorrichtung ferner so durchgeführt werden können, dass sie:
Ereigniszählungsmerkmale (Fec), eindeutige Benutzermerkmale (Fuu) und Engagement-Punktwertmerkmale (Fes) aus dem Satz an Hostnamen-Ereignissen erzeugen, die eine gleiche Hostnamen-Website haben, die über einen Zeitraum akkumuliert werden.

**15.** Gerät nach Anspruch 14, wobei die Befehle als Reaktion auf die Ausführung durch die Verarbeitungsvorrichtung ferner so durchgeführt werden können, dass sie:
die Fec auf der Grundlage eines Verhältnisses einer Anzahl der Hostnamen-Ereignisse, die von der vorhergesagten Entität aus der Hostnamen-Website über den Zeitraum erzeugt werden, zu einer Gesamtanzahl an Rohereignissen erzeugen, die von der vorhergesagten Entität über den Zeitraum erzeugt werden.

**16.** Gerät nach Anspruch 15, wobei die Befehle als Reaktion auf die Ausführung durch die Verarbeitungsvorrichtung ferner so durchgeführt werden können, dass sie:
die Fuu auf der Grundlage eines Verhältnisses einer Anzahl an eindeutigen Benutzern, die zu der vorhergesagten Entität gehören, die Rohereignisse aus der Hostnamen-Website über den Zeitraum erzeugt, zu einer Gesamtanzahl an eindeutigen Benutzern erzeugen, die zu der vorhergesagten Entität gehören, die Rohereignisse über den Zeitraum erzeugt.

**17.** Gerät nach Anspruch 15 oder 16, wobei die Befehle als Reaktion auf die Ausführung durch die Verarbeitungsvorrichtung ferner so durchgeführt werden können, dass sie:
die Fes auf der Grundlage eines Verhältnisses von Engagement-Punktwerten für Interaktionen mit der Hostnamen-Website über den Zeitraum durch Benutzer, die zu der vorhergesagten Entität gehören, zu Engagement-Punktwerten für Interaktionen mit den bzw. allen Websites, auf die zugegriffen wurde, über den Zeitraum durch Benutzer, die zu der Entität gehören, erzeugen, wobei die Engagement-Punktwerte für die Interaktionen mit der Hostnamen-Website und die Engagement-Punktwerte für die Interaktionen mit sämtlichen Websites, auf die zugegriffen wurde, auf dem Satz Eindrücke beruhen, der in dem Satz Rohereignisse enthalten ist.

**18.** Gerät nach einem der Ansprüche 13 bis 17, wobei die Befehle als Reaktion auf die Ausführung durch die Verarbeitungsvorrichtung ferner so durchgeführt werden können, dass sie:

eine erste Reihe von Website-Cluster-Interessenpunktwerten aus den Hostnamen-Ereignissen erzeugen, die über eine Reihe von Grundlinienzeiträumen erzeugt wurden,
eine Grundlinienverteilung aus der ersten Reihe von Website-Cluster-Interessenpunktwerten erzeugen,
eine zweite Reihe von Website-Cluster-Interessenpunktwerten, die über eine nachfolgende Reihe aktueller Zeiträume erzeugt wurden, mit der Grundlinienverteilung vergleichen und
einen starken Entitätsanstieg erkennen, wenn ein beliebiger aus der zweiten Reihe von Website-Interessenpunktwerten außerhalb eines Schwellenbereichs der Grundlinienverteilung liegt.

**19.** Gerät nach einem der Ansprüche 13 bis 18, wobei die Befehle als Reaktion auf die Ausführung durch die Verarbeitungsvorrichtung ferner so durchgeführt werden können, dass sie:

einen Themen-Cluster empfangen, der mehrere Themen enthält,
Verbrauchspunktwerte für die vorhergesagte Entität für jedes der Themen erzeugen,
den Themen-Cluster-Interessenpunktwert auf der Grundlage der Verbrauchspunktwerte für jedes der Themen erzeugen,
den Themen-Cluster-Interessenpunktwert mit dem Website-Cluster-Interessenpunktwert kombinieren, um einen gewichteten Absichtspunktwert zu erzeugen.

**20.** Gerät nach Anspruch 19, wobei die Befehle als Reaktion auf die Ausführung durch die Verarbeitungsvorrichtung ferner so durchgeführt werden können, dass sie:

einen Inhalt ermitteln, der den Ereignissen zugeordnet ist, auf die die Entität zugreift,
eine Relevanz des Inhalts für die Themen ermitteln,
eine Anzahl der von der Entität erzeugten Ereignisse ermitteln und
die Verbrauchspunktwerte für die Entität auf der Grundlage der Anzahl der Ereignisse und der Relevanz des Inhalts für die Themen erzeugen.

**21.** Gerät nach Anspruch 19 oder 20, wobei die Befehle als Reaktion auf die Ausführung durch die Verarbeitungsvorrichtung ferner so durchgeführt werden können, dass sie:

einen Themen-Cluster-Gewichtungsvektor empfangen, der Gewichtungswerte für jedes der Themen enthält, und
den Themen-Cluster-Gewichtungsvektor auf die Verbrauchspunktwerte anwenden, die den gleichen Themen zugeordnet sind, um den Themen-Cluster-Interessenpunktwert zu erzeugen.

**22.** Gerät nach einem der Ansprüche 13 bis 21, wobei der gewichtete Absichtspunktwert Folgendes umfasst:

$$S_{BI} = \frac{S_{TCI}^2}{\alpha_{TCI}^2} + \frac{S_{WCI}^2}{\alpha_{WCI}^2},$$

worin:

$S_{TCI}$ der Themen-Cluster-Interessenpunktwert ist,
$S_{WCI}$ der Website-Cluster-Interessenpunktwert ist,
$\alpha_{TCI}$ ein Themen-Cluster-Interessenschwellenwert ist und

$\alpha_{WCI}$ ein Website-Cluster-Interessenschwellenwert ist.

23. Gerät nach einem der Ansprüche 13 bis 22, wobei die Befehle als Reaktion auf die Ausführung durch die Verarbeitungsvorrichtung ferner so durchgeführt werden können, dass sie:

die Ereignisse erkennen, die den gleichen Hostnamen und die gleiche Entität aufweisen, und
den Website-Cluster-Interessenpunktwert auf der Grundlage der von der gleichen Entität aus der gleichen Hostnamen-Website erzeugten Ereignisse verglichen mit den von der gleichen Entität aus der Hostnamen-Website und den anderen Dritt-Websites erzeugten Ereignissen erzeugen.


**Revendications**

1. Support de stockage non transitoire lisible par ordinateur, comprenant un ensemble d'instructions pour la mise en oeuvre d'un processeur d'événements, l'exécution de l'ensemble d'instructions par un processeur de matériel consistant à amener le processeur de matériel :

à obtenir un ensemble d'événements bruts générés par des sites web auxquels des applications clients accèdent, chaque événement brut de l'ensemble d'événements bruts comprenant un identifiant d'utilisateur d'un utilisateur qui a accédé à un site web qui a généré l'événement brut, un localisateur de ressources universel (URL) du site web accédé, et une adresse de protocole internet (IP) d'un dispositif réseau utilisé pour accéder au site web, et un ensemble d'impressions indiquant les actions prises par l'utilisateur qui a accédé au site web accédé ;
à prédire, pour chaque événement brut, une entité associée à l'adresse IP ;
à extraire de chaque événement brut un nom d'hôte à partir de l'URL ;
à générer un ensemble d'événements de nom d'hôte à partir de l'ensemble d'événements bruts en remplaçant l'URL dans chaque événement brut par le nom d'hôte extrait pour cet événement brut et en remplaçant l'adresse IP dans chaque événement brut par un nom de l'entité prédite pour cet événement brut ;
à générer un ensemble de caractéristiques d'intérêt de site web à partir de l'ensemble d'événements de nom d'hôte, l'ensemble de caractéristiques d'intérêt de site web étant des métriques élaborées qui saisissent l'intérêt de l'entité pour un site web de nom d'hôte, et le site web de nom d'hôte étant un site web associé à l'entité ; et
à générer un score d'intérêt de site web indiquant un niveau d'intérêt de l'entité pour le site web de nom d'hôte par rapport à tous les autres sites web sur la base de l'ensemble des caractéristiques d'intérêt de site web.

2. Support de stockage non transitoire lisible par ordinateur selon la revendication 1, l'exécution de l'ensemble d'instructions consistant en outre à amener le processeur matériel :
à générer des caractéristiques de comptage d'événements (Fec), des caractéristiques d'utilisateur univoques (Fuu) et des caractéristiques de score d'engagement (Fes) à partir de l'ensemble d'événements de nom d'hôte ayant un même site web de nom d'hôte qui sont accumulés sur une période de temps.

3. Support de stockage non transitoire lisible par ordinateur selon la revendication 2, l'exécution de l'ensemble d'instructions consistant en outre à amener le processeur matériel :
à générer les Fec sur la base d'un rapport entre un nombre d'événements de nom d'hôte générés par l'entité prédite à partir du site web de nom d'hôte sur la période de temps et un nombre total d'événements bruts générés par l'entité prédite sur la période de temps.

4. Support de stockage non transitoire lisible par ordinateur selon la revendication 2 ou 3, l'exécution de l'ensemble d'instructions consistant en outre à amener le processeur matériel :
à générer les Fuu sur la base d'un rapport entre un nombre d'utilisateurs univoques appartenant à l'entité prédite et générant des événements bruts à partir du site web de nom d'hôte sur la période de temps et un nombre total d'utilisateurs univoques appartenant à l'entité prédite et générant des événements bruts sur la période de temps.

5. Support de stockage non transitoire lisible par ordinateur selon l'une des revendications 2 à 4, chaque événement brut comprenant en outre un type d'événement indiquant une action ou une activité associée au site web accédé, et l'exécution de l'ensemble d'instructions consistant en outre à amener le processeur matériel :
à générer les Fes sur la base d'un rapport entre des scores d'engagement pour des interactions avec le site web de nom d'hôte sur la période de temps par des utilisateurs appartenant à l'entité prédite et des scores d'engagement pour des interactions avec tous les sites web accédés sur la période de temps par des utilisateurs appartenant à l'entité, les scores d'engagement pour les interactions avec le site web de nom d'hôte et les scores d'engagement pour l'interaction avec tous les sites web accédés étant basés sur l'ensemble d'impressions inclus dans l'ensemble d'événements bruts.

**6.** Support de stockage non transitoire lisible par ordinateur selon l'une des revendications 1 à 5, l'exécution de l'ensemble d'instructions consistant en outre à amener le processeur matériel :

à générer une première série de scores d'intérêt de site web à partir des événements de nom d'hôte générés sur une série de périodes temps de base ;
à générer une distribution de base à partir de la première série de scores d'intérêt de site web ;
à comparer une deuxième série de scores d'intérêt de site web générés sur une série ultérieure de périodes de temps actuelles avec la distribution de base ; et
à identifier une augmentation d'entité lorsque l'un des scores d'intérêt de site web de la deuxième série se situe en dehors d'une plage de seuil de la distribution de base.

**7.** Support de stockage non transitoire lisible par ordinateur selon l'une des revendications 1 à 6, l'exécution de l'ensemble d'instructions consistant en outre à amener le processeur matériel :

à recevoir un groupement de sites web identifiant plusieurs sites web de nom d'hôte ;
à générer des scores d'intérêt de site web pour chacun des sites web de nom d'hôte dans le groupement de sites web ; et
à générer un score d'intérêt de groupement de sites web sur la base des scores d'intérêt de site web pour le groupement de sites web.

**8.** Support de stockage non transitoire lisible par ordinateur selon la revendication 7, l'exécution de l'ensemble d'instructions consistant en outre à amener le processeur matériel :

à recevoir un vecteur de pondération de groupement de sites web comprenant des valeurs de pondération pour chacun des sites web de noms d'hôte ; et
à appliquer le vecteur de pondération de groupement de sites web aux scores d'intérêt de sites web associés aux mêmes sites web de nom d'hôte pour générer le score d'intérêt de groupement de sites web.

**9.** Support de stockage non transitoire lisible par ordinateur selon la revendication 7 ou 8, l'exécution de l'ensemble d'instructions consistant en outre à amener le processeur matériel :

à recevoir un groupement de sujets comprenant plusieurs sujets ;
à générer des scores de consommation pour chacun des sujets ;
à générer un score d'intérêt de groupement de sujets sur la base des scores de consommation pour chacun des sujets ; et
à combiner le score d'intérêt de groupement de sujets avec le score d'intérêt de groupement de sites web pour générer un score d'intention pondéré.

**10.** Support de stockage non transitoire lisible par ordinateur selon la revendication 9, l'exécution de l'ensemble d'instructions consistant en outre à amener le processeur matériel :
à générer les scores de consommation sur la base d'événements générés par l'entité à partir du site web de nom d'hôte et d'événements générés par l'entité à partir d'autres sites web de tiers.

**11.** Support de stockage non transitoire lisible par ordinateur selon la revendication 9 ou 10, l'exécution de l'ensemble d'instructions consistant en outre à amener le processeur matériel :

à recevoir un vecteur de pondération de groupement de sujets comprenant des valeurs de pondération pour chacun des sujets ; et
à appliquer le vecteur de pondération de groupement de sujets aux scores de consommation associés aux mêmes sujets pour générer le score d'intérêt de groupement de sujets.

**12.** Support de stockage non transitoire lisible par ordinateur selon l'une des revendications 9 à 11, le score d'intention pondéré comprenant :

EP 3 447 711 B1

$$S_{BI} = \frac{S_{TCI}^2}{\alpha_{TCI}^2} + \frac{S_{WCI}^2}{\alpha_{WCI}^2},$$

où :

$S_{TCI}$ est le score d'intérêt de groupement de sujets,
$S_{WCI}$ est le score d'intérêt de groupement de sites web,
$\alpha_{TCI}$ est une valeur seuil d'intérêt de groupement de sujets, et
$\alpha_{WCI}$ est une valeur seuil d'intérêt de groupement de sites web.

13. Appareil comprenant :

un dispositif de traitement ;
un dispositif de mémoire couplé au dispositif de traitement, le dispositif de mémoire comprenant des instructions stockées dans celui-ci qui, en réponse à l'exécution par le dispositif de traitement, sont aptes à être mises en oeuvre de manière :

à identifier, à partir de chaque événement brut d'une pluralité d'événements bruts générés par une pluralité de sites web accédés par une pluralité d'applications clients, un identifiant d'utilisateur d'un utilisateur qui a accédé à un site web qui a généré l'événement brut, un localisateur de ressources universel (URL) du site web accédé, et une adresse de protocole internet (IP) d'un dispositif réseau utilisé pour accéder au site web, et un ensemble d'impressions indiquant les actions prises par l'utilisateur qui a accédé au site web accédé ; et
à prédire, pour chaque événement brut, une entité associée à l'adresse IP ;
à extraire de chaque événement brut un nom d'hôte à partir de l'URL ;
à générer un ensemble d'événements de nom d'hôte à partir de l'ensemble d'événements bruts en remplaçant l'URL dans chaque événement brut par le nom d'hôte extrait pour cet événement brut et en remplaçant l'adresse IP dans chaque événement brut par un nom de l'entité prédite pour cet événement brut ;
à générer un ensemble de caractéristiques d'intérêt de site web à partir de l'ensemble d'événements de nom d'hôte, l'ensemble de caractéristiques d'intérêt de site web étant des métriques élaborées qui saisissent l'intérêt de l'entité pour un site web de nom d'hôte, et le site web de nom d'hôte étant un site web associé à l'entité ; et
à générer un score d'intérêt de site web indiquant un niveau d'intérêt de l'entité prédite pour le site web de nom d'hôte par rapport à tous les autres sites web sur la base de l'ensemble de caractéristiques d'intérêt de site web.

14. Appareil selon la revendication 13, les instructions étant en outre aptes, en réponse à l'exécution par le dispositif de traitement, à être mises en oeuvre de manière :
à générer des caractéristiques de comptage d'événements (Fec), des caractéristiques d'utilisateur univoques (Fuu) et des caractéristiques de score d'engagement (Fes) à partir de l'ensemble d'événements de nom d'hôte ayant un même site web de nom d'hôte qui sont accumulés sur une période de temps.

15. Appareil selon la revendication 14, les instructions étant en outre aptes, en réponse à l'exécution par le dispositif de traitement, à être mises en oeuvre de manière :
à générer les Fec sur la base d'un rapport entre un nombre d'événements de nom d'hôte générés par l'entité prédite à partir du site web de nom d'hôte sur la période de temps et un nombre total d'événements bruts générés par l'entité prédite sur la période de temps.

16. Appareil selon la revendication 15, les instructions étant en outre aptes, en réponse à l'exécution par le dispositif de traitement, à être mises en oeuvre de manière :
à générer les Fuu sur la base d'un rapport entre un nombre d'utilisateurs univoques appartenant à l'entité prédite et générant des événements bruts à partir du site web de nom d'hôte sur la période de temps et un nombre total d'utilisateurs univoques appartenant à l'entité prédite et générant des événements bruts sur la période de temps.

17. Appareil selon la revendication 15 ou 16, les instructions étant en outre aptes, en réponse à l'exécution par le dispositif de traitement, à être mises en oeuvre de manière :
à générer les Fes sur la base d'un rapport entre des scores d'engagement pour des interactions avec le site web de nom d'hôte sur la période de temps par des utilisateurs appartenant à l'entité prédite et des scores d'engagement pour des interactions avec tous les sites web accédés sur la période de temps par des utilisateurs appartenant à l'entité, les scores d'engagement pour les interactions avec le site web de nom d'hôte et les scores d'engagement pour les interactions avec tous les sites web accédés étant basés sur l'ensemble d'impressions inclus dans l'ensemble d'événements bruts.

18. Appareil selon l'une des revendications 13 à 17, les instructions étant en outre aptes, en réponse à l'exécution par le dispositif de traitement, à être mises en oeuvre de manière :

à générer une première série de scores d'intérêt de groupement de sites web à partir des événements de nom d'hôte générés sur une série de périodes temps de base ;
à générer une distribution de base à partir de la première série de scores d'intérêt de groupement de sites web ;
à comparer une deuxième série de scores d'intérêt de groupement de sites web générés sur une série ultérieure de périodes de temps actuelles avec la distribution de base ; et
à identifier une augmentation d'entité lorsque l'un des scores d'intérêt de site web de la deuxième série se situe en dehors d'une plage de seuil de la distribution de base.

19. Appareil selon l'une des revendications 13 à 18, les instructions étant en outre aptes, en réponse à l'exécution par le dispositif de traitement, à être mises en oeuvre de manière :

à recevoir un groupement de sujets comprenant plusieurs sujets ;
à générer des scores de consommation pour l'entité prédite pour chacun des sujets ;
à générer un score d'intérêt de groupement de sujets sur la base des scores de consommation pour chacun des sujets ;
à combiner le score d'intérêt de groupement de sujets avec le score d'intérêt de groupement de sites web pour générer un score d'intention pondéré.

20. Appareil selon la revendication 19, les instructions étant en outre aptes, en réponse à l'exécution par le dispositif de traitement, à être mises en oeuvre de manière :

à identifier un contenu associé aux événements auxquels l'entité a accédé ;
à identifier une pertinence du contenu par rapport aux sujets ;
à identifier un nombre des événements générés par l'entité ; et
à générer les scores de consommation pour l'entité sur la base du nombre des événements et de la pertinence du contenu par rapport aux sujets.

21. Appareil selon la revendication 19 ou 20, les instructions étant en outre aptes, en réponse à l'exécution par le dispositif de traitement, à être mises en oeuvre de manière :

à recevoir un vecteur de pondération de groupement de sujets comprenant des valeurs de pondération pour chacun des sujets ; et
à appliquer le vecteur de pondération de groupement de sujets aux scores de consommation associés aux mêmes sujets pour générer le score d'intérêt de groupement de sujets.

22. Appareil selon l'une des revendications 13 à 21, le score d'intention pondéré comprenant :

$$S_{BI} = \frac{S_{TCI}^2}{\alpha_{TCI}^2} + \frac{S_{WCI}^2}{\alpha_{WCI}^2},$$

où:

$S_{TCI}$ est le score d'intérêt de groupement de sujets,
$S_{WCI}$ est le score d'intérêt de groupement de sites web,
$\alpha_{TCI}$ est une valeur seuil d'intérêt de groupement de sujets, et
$\alpha_{WCI}$ est une valeur seuil d'intérêt de groupement de sites web.

23. Appareil selon l'une des revendications 13 à 22, les instructions étant en outre aptes, en réponse à l'exécution par le dispositif de traitement, à être mises en oeuvre de manière :

à identifier les événements qui comprennent le même nom d'hôte et la même entité ; et
à générer le score d'intérêt de groupement de sites web sur la base des événements générés par la même entité à partir du même site web de nom d'hôte par rapport aux événements générés par la même entité à partir du site web de nom d'hôte et des autres sites web de tiers.

FIGURE 1

**FIGURE 2**

FIGURE 3

EVENT

| TIMESTAMP, ID, USER ID, URL, IP, EVENT TYPE | 108 |

CCM 100

| EVENT PROFILER | 140 |
| EVENT PROCESSOR | 144 |

**EVENT DATABASE 146**

252        USER PROFILE 104A

USER ID: 123456

254A    INTENT DATA 106          264

| DOCUMENT DOWNLOAD | WEIGHT = .8 | 266 |
| 262 CAR | RELEVANCY = .5 | |
| FUEL EFFICIENCY | RELEVANCY = .6 | |

254B

| IMPRESSION | WEIGHT = .2 | 266 |
| CAR | RELEVANCY = .4 | |
| CLOUD COMPUTING | RELEVANCY = .8 | |

254C

| VISIT WEBPAGE | WEIGHT = .4 |
| ELECTRIC CARS | RELEVANCY =1.2 |
| BATTERIES | RELEVANCY =.8 |

**PERSONAL DATABASE 148**

252    USER PROFILE 104B

USER ID: 123456

260

THIRD PARTY IDS

262

ATTRIBUTES
     COMPANY
     COMPANY SIZE
     COUNTRY
     JOB TITLE
     DOMAIN (HASH)
     EMAIL (HASH)

**FIGURE 4**

USER COMPUTER — 280

WHITE PAPER — STORAGE VIRTUALIZATION — 282A

NETWORK SECURITY SEMINAR — 282B

WEB PAGE — VPN — 282C

EVENT 1: DOWNLOAD WHITEPAPER — 284A

EVENT 2: REGISTER FOR SEMINAR — 284B

EVENT 3: VIEW WEBPAGE — 284C

CCM 100

EVENT DATABASE 146

| | VIRTUAL STORAGE | NETWORK SECURITY | VPN — 286 | WEIGHT — 288 |
|---|---|---|---|---|
| CONTENT 282A | 0.7 | 0.5 | 0.0 | 0.5 |
| CONTENT 282B | 0.4 | 0.8 | 0.3 | 0.7 |
| CONTENT 282C | 0.3 | 0.2 | 0.6 | 0.2 |

290

USER PROFILE 104

USER INTENT VECTOR 294

| USER X | 0.69 | 0.85 | 0.33 |
|---|---|---|---|

# FIGURE 5

CCM 100

| 286 | VIRTUAL STORAGE | NETWORK SECURITY | VPN |
|---|---|---|---|
| USER X | 0.69 | 0.85 | 0.33 |

INTENT VECTOR 294A

⋮

| USER Y | 0.55 | 0.24 | 0.78 |

INTENT VECTOR 294B

298
300A
300B
300C

| CONTENT Z | 0.15 | 0.87 | 0.25 |

CONTENT Z

TO USER X

# FIGURE 6

118

302

WHAT COMPANIES ARE INTERESTED IN ELECTRIC CARS?

304

WHAT COMPANIES WOULD BE INTERESTED IN DOC 1?  | DOC 1

305

COMPANY X

306

CCM 100

286

| STORAGE VIRT. | NETWORK SECURITY | ELECTRIC CARS | E-COMMERCE | FINANCE |

USER PROFILES 104

294A

307    308    310

[0.0, 1.0, 5.0, 1.0, 2.0] (ANALYST - WEIGHT=1.0, COMPANY X)

294B

[1.0, 1.0, 0.0, 0.2, 0.7] (ANALYST - WEIGHT=1.0, COMPANY X)

294C

[0.8, 1.2, 0.0, 0.0, 3.0] (VP FINANCE - WEIGHT=3.0, COMPANY X)

312A    COMPANY INTENT VECTOR

[1.8, 3.2, 5.0, 1.2, 5.7] (COMPANY X)

312B

[1.8, 3.2, 5.0, 1.2, 5.7] (COMPANY X/WEIGHTED)

314

[1.8, 2.2, 1.0, 1.0, 4.0] (VP FINANCE)

316

COMPOSITE PROFILES

# FIGURE 7

FIGURE 8

**FIGURE 9**

IDENTIFY ALL DOMAIN EVENTS FOR TIME PERIOD — 500

DETERMINE OVERALL RELEVENCY SCORE OVER ALL DOMAINS FOR TOPIC — 502

DETERMINE DOMAIN RELEVENCY SCORE FOR TOPIC — 504

GENERATE INITIAL CONSUMPTION SCORE BASED ON COMPARISON OF DOMAIN RELEVENCY SCORE WITH OVERALL RELEVENCY SCORE — 506

ADJUST COMSUMPTION SCORE BASED ON HISTORIC BASELINE OF DOMAIN EVENTS RELATED TO THE TOPIC (CONSUMPTION) — 508

ADJUST COMSUMPTION SCORE BASED ON NUMBER OF UNIQUE DOMAIN USERS CONSUMING CONTENT RELATED TO TOPIC — 510

IDENTIFY SURGE WHEN CONSUMPTION SCORE ABOVE THRESHOLD — 512

## FIGURE 10

```
┌─────────────────────────────────────────────┐
│  CALCULATE OVERALL MEAN (M) AND STANDARD     │  520
│  DEVIATION (SD) RELEVANCY FOR ALL EVENTS OF  │
│  ALL DOMAINS THAT CONTAIN TOPIC              │
└─────────────────────────────────────────────┘
                      │
                      ▼
┌─────────────────────────────────────────────┐
│  CALCULATE MEAN DOMAIN RELEVENCY FOR GROUP   │  522
│  OF DOMAIN EVENTS THAT CONTAIN TOPIC         │
└─────────────────────────────────────────────┘
                      │
                      ▼
┌─────────────────────────────────────────────┐
│  COMPARE DOMAIN MEAN DOMAIN RELEVENCY        │  524
│  WITH OVERALL M AND SD                       │
└─────────────────────────────────────────────┘
                      │
                      ▼
┌─────────────────────────────────────────────┐
│  CALCULATE INITIAL CONSUMPTION SCORE BASED   │  526
│  ON COMPARISON OF DOMAIN RELEVENCY WITH      │
│  OVERALL RELEVENCY SCORE                     │
└─────────────────────────────────────────────┘
                      │
                      ▼
┌─────────────────────────────────────────────┐
│                  RETURN                      │
└─────────────────────────────────────────────┘
```

**FIGURE 11**

540 — ASSIGN INITIAL CONSUMPTION SCORE BASED ON RELEVANCY OF EVENTS TO THE TOPIC

542 — CONSUMPTION ABOVE HISTORIC BASELINE FOR CONSECUTIVE WEEKS

N

544 — CONSUMPTION ABOVE BASELINE FOR PAST WEEK

Y → 546 — REDUCE CONSUMPTION SCORE BY FIRST AMOUNT

N

548 — CONSUMPTION ABOVE HISTORIC BASELINE MULITPLE WEEKS WITH INTERRUPTION

Y → 550 — REDUCE CONSUMPTION SCORE BY SECOND AMOUNT

N

552 — CONSUMPTION BELOW HISTORIC BASELINE

Y → 554 — REDUCE CONSUMPTION SCORE BY THIRD AMOUNT

N

556 — FIRST TIME DOMAIN

Y → 558 — REDUCE CONSUMPTION SCORE BY FOURTH AMOUNT

N

560 — NUMBER OF UNIQUE USERS DECREASING

Y → REDUCE CONSUMPTION SCORE BY FIFTH AMOUNT — 562

N

RETURN

**FIGURE 12**

IDENTIFY SURGING TOPIC FOR COMPANY ABC LOCATION Y — 580

IDENTIFY COMPANY ABC CONTACTS WITH JOB TITLE/ LOCATION ASSOCIATED WITH SURGING TOPIC — 582

MAP SURGING TOPIC TO IDENTIFIED COMPANY CONTACT PROFILES — 584

RETURN

# FIGURE 13

EP 3 447 711 B1

604  602

112  NEW
     FIREWALL
     IMPROVES
     NETWORK
     PERFORMANCE  110

600

EVENTS 108

610

ID, URL, EVENT TYPE, IMPRESSIONS

TOPICS 102

EVENT PROCESSOR 144

ENGAGEMENT
SCORE 612

RELEVANCY
462

CONSUMPTION
SCORE
GENERATOR 400

CCM 100

CONSUMPTION
SCORES 410

PUBLISHER 118

CONTACT LIST 200

COMPANY ABC
CONTACT 1
CONTACT 2    418

CONTENT 420

TOPIC 102A

FIGURE 14

FIGURE 15

CCM 100

TOPICS 102

EVENTS 108                    610

ID, URL, EVENT TYPE, IMPRESSIONS

EVENT PROCESSOR 144

SITE CLASSIFIER 640

PUBLISHER 642A
VENDOR    642B

RELEVANCY 462

CONSUMPTION SCORE GENERATOR 400

604   602

112   WELCOME TO ACME

SERVERS STORAGE SUPPORT   110

600

PUBLISHER 118

CONTACT LIST 200

COMPANY ABC
CONTACT 1   418
CONTACT 2

CONSUMPTION SCORES 410

CONTENT 420

TOPIC 102A

FIGURE 16

EP 3 447 711 B1

EVENTS 108

452

| ID, URL, EVENT TYPE, IMPRESSIONS |
| --- |

610

**CCM 100**

| TOPICS 102 |
| --- |

EVENT PROCESSOR 144

| SITE CLASSIFIER 640 |
| --- |
| WEBSITE #1 CLASSIFICATION 642 |

RELEVANCY 402

| CONSUMPTION SCORE GENERATOR 400 |
| --- |

| CONSUMPTION SCORES 410 |
| --- |

WEBSITE GRAPH 646

WEBSITE 644

648B
648H    648C
646
648I
648A
648G
648D
646
646    648E
646
648F

650

NODE 648A
FEATURE 1    # SUBLINKS       650A
FEATURE 2    LAYER            650B
FEATURE 3    TOPIC PROFILE    650C
FEATURE 4    TOPIC SIMILAR.   650D
FEATURE 5    IMPRESSIONS      650E
FEATURE 6    CONTENT AMT.     650F
FEATURE 7    CONTENT TYPE     650G
FEATURE 8    UPDATES          650H

NODE 648B
FEATURE 1    #SUBLINKS
FEATURE 2    LAYER
⋮

**FIGURE 17**

| RECEIVE EVENT | 670A |
|---|---|

| START AT HOME PAGE OF WEBSITE ASSOCIATED WITH THE EVENT | 670B |
|---|---|

| CRAWL THROUGH WEBSITE IDENTIFYING STRUCTURE BETWEEN DIFFERNET NODES (WEB PAGES) IN WEBSITE | 670C |
|---|---|

| EXTRACT A LIST OF FEATURES FOR EACH NODE | 670D |
|---|---|

| CLASSIFY WEBSITE BASED ON WEBSITE STRUCTURE AND FEATURES FOR WEBSITE NODES | 670E |
|---|---|

| ADJUST RELEVANCY SCORE FOR A COMPANY TOPIC BASED ON THE WEBSITE CLASSIFICATION | 670F |
|---|---|

# FIGURE 18

CCM <u>100</u>

EVENT
PROCESSOR 144

450  452  454  456  458

| USER ID | URL | IP | EVENT TYPE | TS |

RAW EVENTS 108

ENTITY
PREDICTOR
<u>704</u>

HOST NAME
EXTRACTOR
<u>706</u>

CCM TAGS
<u>110</u>

CONTENT <u>112</u>

RAW
EVENTS
DATABASE
<u>702</u>

FIRST PARTY
<u>711</u>

450  710  712  456  458

| USER ID | HOSTNAME | ENTITY | EVENT TYPE | TS |

HOSTNAME EVENTS 708

# FIGURE 19

EP 3 447 711 B1

```
                                          WEBSITE INTEREST
                                          DETECTOR 700

┌─────────────┐              CCM 100
│ FIRST PARTY │         ┌──────────────────────────────┐
│     711     │         │ EVENT                        │
└──────┬──────┘         │ PROCESSOR 144                │
       │                │  ┌────────────────────────┐  │
       │                │  │      WEBSITE           │  │
 450  710 ▼ 712  456  458│  │   INTEREST (WI)        │  │
┌─────┬────────┬──────┬──────────┬────┐ │  FEATURE         │  │      ┌──────────────────────────┐
│USER I│HOSTNAME│ENTITY│EVENT TYPE│ TS │ │  GENERATOR       │  │      │   WEBSITE INTEREST       │
└─────┴────────┴──────┴──────────┴────┘ │      720         │  │ ───► │      FEATURES            │
                                        │  └────────────────────────┘  │      │(F_EC 722A, F_UU 722B,    │
       HOSTNAME EVENTS 708              └──────────────────────────────┘      │    F_ES 722C)            │
                                                                               └──────────────────────────┘
```

# FIGURE 20

COUNT TOTAL NUMBER OF EVENTS ENTITY GENERATED FROM ALL WEBSITES — 740A

COUNT NUMBER OF EVENTS ENTITY GENERATED FROM HOSTNAME WEBSITE — 740B

CALCULATE EVENT COUNT RATIO (Fec) OF HOSTNAME EVENTS TO TOTAL EVENTS — 740C

**FIGURE 21**

COUNT TOTAL NUMBER OF UNIQUE USERS FOR ENTITY THAT GENERATE EVENTS FROM ANY WEBSITE — 750A

COUNT NUMBER OF UNIQUE USERS FOR ENTITY THAT GENERATE EVENTS FROM HOSTNAME WEBSITE — 750B

CALCULATE UNIQUE USER RATIO ($F_{UU}$) OF UNIQUE HOSTNAME USERS TO TOTAL UNIQUE USERS — 750C

# FIGURE 22

CALCULATE ENGAGEMENT SCORES GENERATED BY ENTITY FROM ALL CONTENT — 760A

CALCULATE ENGAGEMENT SCORES GENERATED BY ENTITY FROM CONTENT ON HOSTNAME WEBSITE — 760B

CALCULATE ENGAGEMENT SCORE RATIO ($F_{ES}$) OF HOSTNAME ENGAGEMENT SCORES TO ALL CONTENT ENGAGEMENT SCORES — 760C

# FIGURE 23

$$S_{WI} = \sum_f \beta F$$

FIGURE 24

EP 3 447 711 B1

$$S_{WCI} = \left\| \bar{S}_{WI} \circ \overline{W}_w \right\|$$

WEBSITE CLUSTER INTEREST SCORE ( $S_{WCI}$ )

WEBSITE CLUSTER 732

WEBSITES 710

WEBSITE 1 WEBSITE 2 WEBSITE 3 WEBSITE 4 WEBSITE 5

WEBSITE 1 WEBSITE 2 WEBSITE 3 WEBSITE 4 WEBSITE 5

WEBSITES 710

$\bar{S}_{WI}$ = [ 1.2, 0.5, 0.2, 1.7, 0.7 ] • $\overline{W}_w$ = [ 0.25, 0.55, 0.14, 0.65, 0.76 ]

$S_{WI}$

WEBSITE WEIGHTINGS 734

WEBSITE INTEREST SCORE VECTOR( $\bar{S}_{WI}$ )     WEBSITE CLUSTER WEIGHTING VECTOR ( $\overline{W}_w$ )

**FIGURE 25A**

$$S_{TCI} = \| \bar{S}_{TI} \circ \overline{W}_t \|$$

TOPIC CLUSTER INTEREST SCORE ($S_{TCI}$)

TOPIC CLUSTER 726

TOPIC
725

$$\bar{S}_{TI} = [1.8, \quad 3.2, \quad 5.0, \quad 1.2, \quad 5.7]$$

TOPIC 1   TOPIC 2   TOPIC 3   TOPIC 4   TOPIC 5

CONSUMPTION
SCORES 410

TOPIC INTEREST SCORE VECTOR ($\bar{S}_{TI}$)

$\circ$

TOPIC
725

$$\overline{W}_t = [0.25, \quad 0.55, \quad 0.14, \quad 0.65, \quad 0.76]$$

TOPIC 1   TOPIC 2   TOPIC 3   TOPIC 4   TOPIC 5

TOPIC
WEIGHTINGS 728

TOPIC CLUSTER WEIGHTING VECTOR ($\overline{W}_t$)

**FIGURE 25B**

61

EVENT PROCESSOR 144

RAW EVENTS 108

ENTITY PREDICTOR 704

HOSTNAME EXTRACTOR 706

FIRST PARTY 711

HOSTNAME EVENTS 710 712 • • •

708

WEBSITE INTEREST (WI) FEATURE GENERATOR 720

722

WEBSITE CLUSTER 732

Fec

Fuu

Fes

WEBSITE INTEREST SCORE

$$S_{WI} = \sum_f \beta F$$

772

$\overline{W}_w$

$S_{WI}$

WEBSITE CLUSTER INTEREST SCORE

$$S_{WCI} = \| \bar{s}_{WI} \circ \overline{W_w} \|$$

773

$S_{WCI}$

CONSUMPTION SCORE GENERATOR 400

TOPIC CLUSTER 726

$\overline{W}_t$

$\bar{s}_{TI}$

TOPIC CLUSTER INTEREST SCORE

$$S_{TCI} = \| \bar{s}_{TI} \circ \overline{W_t} \|$$

774

$S_{TCI}$

$\alpha_{TCI}$

$\alpha_{WCI}$

BUYER INTENT SCORE

$$S_{BI} = \frac{s_{TCI}^2}{\alpha_{TCI}^2} + \frac{s_{WCI}^2}{\alpha_{WCI}^2}$$

776

$S_{BI}$

FIGURE 26

$$S_{BI} = \frac{S_{TCI}^2}{\alpha_{TCI}^2} + \frac{S_{WCI}^2}{\alpha_{WCI}^2}$$

**FIGURE 27**

EP 3 447 711 B1

FIG. 28

64

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 98152915
- US 9940634 B
- US 62549812

- WO 2017116493 A1
- US 20140280890 A1
- US 20110320715 A1